# EUROPEAN PATENT SPECIFICATION

(11) **EP 2 666 314 B1**
(45) Date of publication and mention of the grant of the patent: **15.05.2019**
(21) Application number: 12737140.9
(22) Date of filing: 20.01.2012
(51) Int. Cl.: H04W 76/11, H04W 8/08

(54) **NETWORK APPARATUS AND PROCESS TO DETERMINE THE CONNECTION CONTEXT FOR CONNECTIONS USED FOR (LOCAL) OFFLOADING**
NETZWERKVORRICHTUNG UND VERFAHREN ZUR BESTIMMUNG DES VERBINDUNGSKONTEXTS FÜR VERBINDUNGEN FÜR (LOKALE) ENTLADUNGEN
APPAREIL DE RÉSEAU ET PROCÉDÉ POUR DÉTERMINER LE CONTEXTE DE CONNEXION POUR DES CONNEXIONS UTILISÉES POUR UN DÉLESTAGE (LOCAL)

(30) Priority: 21.01.2011 US 201161435047 P
(43) Date of publication of application: 27.11.2013
(73) Proprietor: BlackBerry Limited, Waterloo, ON N2K 0A7 (CA)
(72) Inventor: BAKKER, Jan Hendrik Lucas, Irving, TX 75039 (US); CHOI, Noun, Irving, TX 75039 (US)
(74) Representative: Hanna Moore + Curley
(86) International application number: PCT/US2012/022082
(87) International publication number: WO 2012/100199

(56) References cited:
- KR-A- 20100 119 349
- US-A1- 2008 102 896
- US-A1- 2010 216 484
- US-A1- 2010 272 013
- "3rd Generation Partnership Project; Technical Specification Group Services and System Aspects; General Packet Radio Service (GPRS) enhancements for Evolved Universal Terrestrial Radio Access Network (E-UTRAN) access (Release 10)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.2.1, 4 January 2011 (2011-01-04), pages 1-276, XP050462517, [retrieved on 2011-01-04]
- QUALCOMM EUROPE: "eHRPD terminology in TS 29.274", 3GPP DRAFT; C4-090290, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Antonio; 20090223, 23 February 2009 (2009-02-23), XP050315338, [retrieved on 2009-02-23]

## Description

### BACKGROUND

### Field

The present disclosure is directed in general to communications systems and methods for operating same. In one aspect, the present disclosure relates to the methods, systems and devices for managing local internet protocol (IP) access (LIPA) connection releases.

### Description of the Related Technology

Within the 3rd Generation Partnership Project (3GPP), standards are being developed for the interface between the mobile core network and a femtocell which is a small cellular base station, typically designed for use in a home or small business. Home NodeB (HNB), Home eNB (HeNB) and femto cell are concepts introduced for Universal Mobile Telecommunications System (UMTS) and Long Term Evolution (LTE) evolved UMTS Terrestrial Radio Access Network (E-UTRAN) to improve indoor and micro-cell coverage as well as to leverage wireline backhaul to the "home." A femtocell is widely used outside of 3GPP to mean any cell with a very small coverage, and typically installed in a private premises (either private or corporate or residential/enterprise). The Home NodeB (HNB), Home eNB (HeNB) and femto cell can have a residential or enterprise IP network. The terms HeNB/HNB are used in 3GPP with specific meanings, i.e. that the cell is a closed subscriber group (CSG) or hybrid cell. A CSG identifies subscribers of an operator who are permitted to access one or more cells of the public land mobile network (PLMN) but which have restricted access. A H(e)NB subsystem supports Local IP Access in order to provide access for IP-capable user equipment (UE) devices connected via a H(e)NB subsystem (i.e. using H(e)NB radio access) to other IP capable entities in the same residential IP network or enterprise IP network. The term macrocell, while not having significance in 3GPP specifications, is widely used to mean a cell other than a CSG cell.

An important aspect of HeNB/HNB functionality is the ability to restrict access to particular users. For example, access may be restricted to employees of the company on whose site the HeNB is deployed, to customers of a particular coffee shop chain, or (in the case of HeNBs deployed in private homes) to individuals. To achieve this functionality, 3GPP has defined the concept of the Closed Subscriber Group (CSG). The CSG cell is one which indicates that it is a CSG cell (by means of 1 bit broadcast in the system information) and broadcasts a CSG ID (also in system information). A cell can only indicate one (or none) CSG IDs, however multiple cells may share a CSG ID, AUE device may be subscribed to multiple CSGs. The UE may for example may be a mobile terminal such as, but not limited to, a cellular telephone, a personal data assistant (PDA), or a wirelessly enabled computer. A subscription may be temporary in nature (e.g., a coffee shop allows a customer one hour's access to its CSG).

3GPP standards are also being developed for the concept of selected IP traffic offloading (SIPTO) which allows internet traffic to flow from the femtocell directly to the internet, bypassing the operator's core network. SIPTO is used to offload selected types of IP traffic (e.g. internet traffic) towards a defined IP network close to the UE's point of attachment to the access network. SIPTO is applicable to traffic offload for the macro• cellular access network and for the femto cell subsystem SIPTO PDN Connectivity indicates a PDP Context or PDN Connection that allows offload of selected types of IP traffic (e.g. internet traffic) towards a defined IP network close to the UE's point of attachment to the access network. SIPTO is applicable to traffic offload for the macro-cellular access network and for the femto cell subsystem.

In addition, standards are being developed for local IP Access (LIPA) which allows an IP-capable UE connected via a femto cell direct access to other IP-capable devices in the local residential/corporate IP network. LIPA PDN Connectivity indicates a PDP Context (in the case of a GERAN or UTRAN femto cell connected to a GPRS core network) or a PDN Connection (in the case of an E-UTRAN femto cell connected to a GPRS core network) that gives access to services located in the local residential/corporate IP network of the femto cell subsystem,

The document 3rd Generation Partnership Project Technical Specification 23.401 defines the Stage 2 service description for the Evolved 3GPP Packet Switched Domain also known as the Evolved Packet System (EPS) in this document. The invention is set out in the appended set of claims.

### BRIEF DESCRIPTION OF THE DRAWINGS

The present disclosure may be understood, and its numerous objects, features and advantages obtained, when the following detailed description is considered in conjunction with the following drawings, in which:
Figure 1 is a schematic diagram of an example logical architecture for use in a HNB cell;
Figure 2 is a schematic diagram of an example logical architecture for use in a HeNB cell in which the network includes a dedicated HeNB GW;
Figure 3 is a schematic diagram of another example logical architecture for use in a HeNB cell in which the network does not include a dedicated HeNB GW;
Figure 4 is a schematic diagram of a further example logical architecture for use in a HeNB cell in which the network includes a HeNB GW for the C-Plane;
Figure 5 is a schematic diagram of an example LIPA architecture for use in a HeNB cell using a local PDN connection;
Figure 6 is a schematic diagram of traffic flow for UE-requested PDN connectivity;
Figure 7 is a schematic diagram of traffic flow for UE-requested PDN connectivity to LIPA;
Figure 8 is a schematic diagram of an example logical architecture for use in a HNB cell illustrating Local IP connectivity;
Figure 9 is a schematic diagram of the example logical architecture for use in a HeNB cell illustrating Local IP connectivity;
Figure 10 is a schematic diagram of traffic flows in an HeNB subsystem in which the UE has at least a LIPA PDN connection;
Figure 11 is a schematic diagram of traffic flows in an HeNB subsystem in which the UE moves outside of HeBN coverage;
Figure 12 is a schematic block diagram illustrating a network procedure for determining context for connections used for local offloading according to one embodiment;
Figure 13 is a signal flow diagram illustrating a Tracking Area Update procedure with Serving GW change according to one embodiment;
Figure 14 is a signal flow diagram illustrating E-UTRAN Tracking Area Update without S-GW change according to one embodiment;
Figure 15 is a signal flow diagram illustrating the exchange of messages between functional elements where a UE performs CS fall back (CSFB) according to one embodiment;
Figure 16 illustrates an example computer system that may be suitable for implementing one or more embodiments disclosed herein; and
Figure 17 is a schematic block diagram illustrating exemplary components of a mobile wireless communications device which may be used with selected embodiments of the present disclosure.

### DETAILED DESCRIPTION

The following detailed description presents various embodiments of the present disclosure. However, the present disclosure is intended to provide a multitude of different ways as defined and covered by the claims. In this description, reference is made to the drawings where like reference numerals indicate identical or functionally similar elements.

The terminology used in the description presented herein is not intended to be interpreted in any limited or restrictive manner, simply because it is being utilized in conjunction with a detailed description of certain specific embodiments of the disclosure. Furthermore, embodiments of the disclosure may include several novel features, no single one of which is solely responsible for its desirable attributes or which is essential to practicing the inventions herein described.

Embodiments are described herein in the context of an LTE wireless network or system, but can be adapted for other wireless networks or systems. The LTE wireless network described herein is generally in compliance with 3GPP LTE standard, including, but not limited to, Releases 8 to 11 and beyond.

### Definition of Terminology

In connection with these developing standards and/or in the context of this document, the following abbreviations and meanings have been developed.

An Access Point Name (APN) identifies an IP packet data network (PDN) that a mobile data user wants to communicate with. In addition to identifying a PDN, an APN may also be used to define the type of service, (e.g. connection to wireless application protocol (WAP) server, multimedia messaging service (MMS)), that is provided by the PDN. APN is used in 3GPP data access networks, such as general packet radio service (GPRS) and evolved packet core (EPC).

The Connectivity Type indicates the type of connectivity provided for a packet data protocol (PDP) Context or PDN Connection, and applies to both connectivity established in a macro cell (in which case it can be either remote connectivity - i.e., with a GGSN/PDN gateway (GW) located in the operator core network -- or SIPTO connectivity or remote IP access (RIPA) connectivity) and to connectivity established in a H(e)NB (in which case it can be either SIPTO connectivity or LIPA connectivity). A request for connectivity message may include a connectivity type indication. For example, the requested connectivity type is represented by including a particular APN value or otherwise in the message. A Mobility Management Entity (MME) may accept the request for connectivity message after consulting subscription information or operator policy. Upon accepting, the MME proceeds and realizes the connectivity requested in the message. The connectivity realized may be off a connectivity type.

A Core Network PDN Connection/PDP Context (CN PDN Connection/PDP Context) is a PDN Connection/PDP Context whose IP traffic traverses the operator core network, e.g. the IP traffic is routed through a SGW and a PDN GW located in the operator core network.

A Closed Subscriber Group (CSG) identifies subscribers of an operator who are permitted to access one or more cells of the PLMN but which have restricted access (CSG cells).

A CSG Cell is a cell that is part of the public land mobile network (PLMN) broadcasting a specific CSG identity, and that is accessible by the members of the closed subscriber group for that CSG identity. All the CSG cells sharing the same identity are identifiable as a single group for the purposes of mobility management and charging. A CSG Cell is considered to be synonymous of HNB and HeNB.

An Allowed CSG List is a list stored in the network and the UE containing all the CSG identity information of the CSGs to which the subscriber belongs.

A CSG Owner is the owner of one or more H(e)NBs that have been configured as a CSG cell(s) for a particular CSG. A CSG owner can, under the H(e)NB operator's supervision, add, remove and view the list of CSG members.

Local IP Access (LIPA) provides access for IP-capable UEs connected via a H(e)NB (i.e. using H(e)NB radio access) to other IP capable entities in the same residential/enterprise IP network. Traffic for Local IP Access is expected to not traverse the mobile operator's network except H(e)NB.

A LIPA PDN Connection/PDP Context is a PDN Connection or PDP Context that gives access to the UE to services located in the local residential/corporate IP network. The PDN GW/GGSN (or Local GW) is selected in such a way to provide this type of connectivity. Alternatively, a LIPA PDN Connection/PDP context is defined as a PDN Connection/PDP context that provides access for IP capable UEs connected via a H(e)NB (i.e. using H(e)NB radio access) to other IP capable entities in the same residential/enterprise IP network. Alternatively, a LIPA PDN connection or LIPA PDP context is a PDN Connection that the MME authorizes for connectivity to a PDN GW for a UE connected to a HeNB based on a request from the UE for LIPA connectivity and based on the CSG ID of the HeNB. Alternatively, a LIPA PDN connection or LIPA PDP context is a PDN Connection which was activated by the UE requesting LIPA connectivity type "LIPA" and the MME informing the UE of the connectivity type provided.

LIPA PDN Continuity refers to the UE having a LIPA PDN Connection/PDP Context while camping or connected in a H(e)NB that maintains the connection when moving to another H(e)NB or to a macro cell.

An evolved packet core (EPC) functionality (e.g., SGSN, MME, S-GW, PDN GW, GGSN, etc.) is LIPA-aware and/or SIPTO-aware and/or SIPTO-local-aware if the functionality determines that a given PDN connection or PDP context is a LIPA/SIPTO/SIPTO-local PDN connection or PDP context. Alternatively, the functionality is LIPA-aware and/or SIPTO-aware and/or SIPTO-local-aware if it is configured to manage network contexts (e.g. PDN connection/PDP context descriptors and related signaling) for LIPA/SIPTO/SIPTO-local connections.

Network address translator (NAT) is a translator that modifies network address information in datagram (IP) packet headers while in transit across a traffic routing device for the purpose of remapping one IP address space into another.

A Packet Data Network (PDN) is a network providing data services, such as the Internet, Intranet and ATM networks.

A PDN Connection is a connection to a specific PDN identified by a specific APN.

Remote Connectivity refers to a PDP Context or PDN Connection for which the GGSN or the PDN GW, respectively, are selected in the PLMN core network according to current selection mechanisms. Remote Connectivity does not include providing SIPTO or LIPA connectivity, but could be providing RIPA connectivity.

Selected IP Traffic Offload (SIPTO) operations offload selected types of IP traffic (e.g., internet traffic) towards an IP network close to the UE's point of attachment to the access network. SIPTO is applicable to traffic offload for the macro-cellular access network and for the H(e)NB subsystem.

SIPTO PDN Connection/PDP Context refers to a PDN Connection/PDP Context for which the breakout point (e.g., PDN GW or GGSN) is close to the UE's point of attachment to the access network.

SIPTO Local refers to the offload of selected types of IP traffic (e.g., internet traffic) at the H(e)NB towards the Internet.

SIPTO Local PDN Connection/PDP Context is a PDN Connection/PDP Context for which the breakout point is the H(e)NB the UE is connected to and provides access to the Internet.

Home Node B (HNB) refers to customer-premises equipment that connects a 3GPP UE over UTRAN wireless air interface to a mobile operator's network, e.g., using broadband IP backhaul.

Home Evolved Node B (HeNB) refers to a customer-premises equipment that connects a 3GPP UE over E-UTRAN wireless air interface to a mobile operator's network, e.g., using broadband IP backhaul.

A H(e)NB Gateway is a mobile network operator's equipment (usually physically located on mobile operator premises) through which the H(e)NB gets access to mobile operator's core network. For HeNBs, the HeNB Gateway is optional.

A Default PDN Connection is the connection to the PDN that the operator has set as default for the UE (for a PDP Connection in EPS or a PDP Context in GPRS) (provisioned in the subscriber profile). The UE may not know the APN for the Default PDN even after the UE attaches to the network and obtains connectivity to the default PDN.

The Default APN is the APN describing the default PDN connection, i.e., the PDN connection that the operator has set as default for the UE (provisioned in the subscriber profile). The UE may not know the Default APN even after the UE attaches to the network and obtains connectivity to the default PDN.

### Overview of Network Architecture Model for CSG Cells

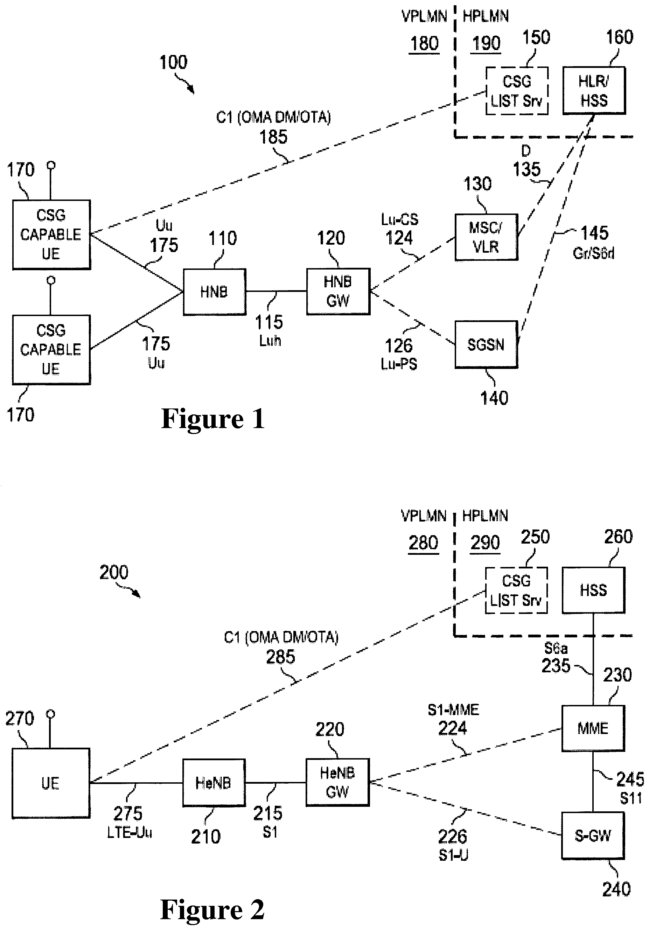

The network architecture model for the support of CSG Cells is described in 3GPP TR 23.830 (Architecture aspects of Home NodeB and Home eNodeB) and depicted with reference to Figure 1. Figure 1 shows an architecture model for a Home NodeB access network 100. As depicted, the network 100 includes one or more CSG-capable UEs 170 in communication with a HNB 110 over reference point Uu 175. The UEs 170 may, for example, be a mobile terminal such as, but not limited to, a cellular telephone, a personal data assistant (PDA), or a wirelessly enabled computer. The HNB 110 is in communication with a HNB gateway (HNB GW) 120 over reference point Iuh 115. The HNB GW 120 is in communication with mobile switching center/visitor location center (MSC/VLR) 130 over reference point Iu-CS 124. The HNB GW 120 is also in communication with serving GPRS Support Node (SGSN) 140 over reference point Iu-PS 126. A CSG List Server (CSG List Srv) 150 and home location register/home subscriber server (HLR/HSS) 160 are part of a home public land mobile network (HPLMN) 190. Networks that are not the HPLMN 190 on which the UE may operate are a visited public land mobile network (VPLMN) 180. The MSC/VLR 130 and the SGSN 140 are each in communication with the HLR/HSS 160 over reference points D 135 and GRs6d 145, respectively. One of the CSG enabled UEs 170 is in communication with the CSG List Srv 150 over reference point C1 185. A more detailed description of the elements and communication reference points of Figure 1 are provided hereinbelow.

HNB 110: The HNB 110 provides the RAN connectivity using the Iuh 115 interface, supports the NodeB and most of the radio network controller (RNC) functions and also HNB authentication, HNB-GW discovery, HNB registration and UE registration over Iuh 115. The HNB 110 secures the communication to/from the SeGW.

HNB GW 120: The HNB GW 120 serves the purpose of a RNC presenting itself to the core network (CN) as a concentrator of HNB connections, i.e. the HNB GW 120 provides concentration function for the control plane and provides concentration function for the user plane. The HNB GW 120 supports Non Access Stratum (NAS) Node Selection Function (NNSF).

Uu 175: Standard Uu interface between the UE 170 and the HNB 110.

Iuh 115: Interface between the HNB 110 and HNB GW 120. For the control plane, Iuh 115 uses HNBAP protocol to support HNB registration, UE registration and error handling functions. For the user plane, Iuh support user plane transport bearer handling.

Iu-CS 124: Standard Iu-CS interface between the HNB GW 120 and the circuit switched (CS) core network.

Iu-PS 126: Standard Iu-PS interface between the HNB GW 120 and the packet switched (PS) core network.

D 135: Standard D interface between mobile switching center/visitor location center (MSC/VLR) 130 and home location register/home subscriber server (HLR/HSS) 160.

Gr/S6d 145: Standard Gr interface between serving GPRS Support Node (SGSN) 140 and HLR/HSS 160.

C1 185: Optional interface between the CSG List Server (CSG List Srv) 150 and CSG-capable UEs 170. Over-the-air (OTA) signaling is used to update the allowed CSG list on a UE 170 with a Release 8 (Rel-8) Universal Subscriber Identity Module (USIM). In some embodiments, Open Mobile Alliance (OMA) Device Management (DM) is used to update the Allowed CSG list on the UE 170 with a pre-Rel-8 USIM.

UEs that are capable of supporting Rel-8 functionality of the 3GPP standard may support CSG functionality and maintain a list of allowed CSG identities. This list can be empty in case the UE does not belong to any CSG.

Each cell of a HeNB may belong to, at maximum, one CSG. It is possible for cells of a HeNB to belong to different CSGs and hence have different CSG IDs.

The Allowed CSG List is provided as part of the CSG subscriber's subscription data to the MME.

The Allowed CSG List can be updated in the UE according to the result of the attach procedure, the Tracking Area Update (TAU) procedure, service request and detach procedures or by application level mechanisms such as OMA DM procedures.

The MME performs access control for the UEs accessing through CSG cells during attach, combined attach, detach, service request and TAU procedures.

The UE is notified of the cause of rejection by the network if the UE is not allowed to access a CSG cell.

When a CSG ID which is not included in the UE's Allowed CSG List is manually selected by the user, a TAU procedure via the selected CSG cell may be triggered immediately by the UE to allow MME to perform CSG access control.

There is no restriction on Tracking Area Identity (TAI) assignment for E-UTRAN CSG cells. As a result, it is possible that a normal cell (non-CSG cell) and a CSG cell can share the same TAI or have different TAIs. In addition, it is possible that CSG cells with different CSG ID can share the same TAI or have different TAIs. It is also possible that CSG cells with the same CSG ID can share the same TAI or have different TAIs.

The concept of TAI list applies also for CSG cells. The TAI list may include TAIs related to CSG cells and TAIs related to non-CSG cells. The UE does not differentiate these TAIs in the TAI list.

For the case of HeNB GW deployment, TAIs supported in the HeNB GW are the aggregation of TAIs supported by the CSG cells under this HeNB GW.

### Example Network Architectures for HeNB CSG Cells

Several architectures for HeNB CSG Cells will now be described with reference to Figures 2-4. Starting with Figure 2, there is depicted an architecture model for a HeNB access network 200 which includes a dedicated HeNB GW. In the depicted network 200, a single UE 270 is in communication with a HeNB 210 over reference point LTE-Uu 275. The HeNB 210 is also in communication with a HeNB gateway (HeNB GW) 220 over reference point S1 215. The HeNB GW 220 is in communication with mobility management entity (MME) 230 over reference point S1-MME 224, and is also in communication with serving gateway (S-GW) 240 over reference point S1-U 226. A CSG List Server (CSG List Srv) 250 and home subscriber server (HSS) 260 are part of a home public land mobile network (HPLMN) 290. Networks that are not the HPLMN 290 on which the UE may operate are a visited public land mobile network (VPLMN) 280. The MME 230 is in communication with the HSS 260 over reference point S6a 235. The S-GW 240 is in communication with the MME 230 over reference point S1 1 245. The UE 270 is in communication with the CSG List Srv 250 over reference point C1 285. A more detailed description of the elements and communication reference points of Figure 2 are provided below.

HeNB 210: The functions supported by the HeNB 210 may be the same as those supported by an eNB (with the possible exception of Non Access stratum (NAS) node selection function (NNSF)) and the procedures run between a HeNB and the evolved packet core (EPC) may be the same as those between an eNB and the EPC. The HeNB 210 secures the communication to/from the SeGW 240.

HeNB GW 220: HeNB GW 220 serves as a concentrator for the control plane (C-Plane), specifically the S1-MME interface 224. The HeNB GW may optionally terminate the user plane towards the HeNB 210 and towards the S-GW 240, and provide a relay function for relaying User Plane data between the HeNB 210 and the S-GW 240. In some embodiments, the HeNB GW 220 supports NNSF.

S-GW 240: The Security Gateway 240 is a logical function that may be implemented either as a separate physical entity or co-located with an existing entity. The S-GW 240 secures the communication from/to the HeNB 210.

LTE-Uu 275: Standard LTE-Uu interface between the UE 270 and the HeNB 210.

S1-MME 224: The S1-MME 224 interface is defined between HeNB 210 and MME 230 if no HeNB GW 220 is used. If HeNB GW 220 is present, as in Figure 2, the HeNB GW 220 may use an S1-MME interface towards both HeNB (S1 215) and MME (S1-MME 224).

S1-U 226: The S1-U data plane is defined between the HeNB 210, HeNB GW 220 and the Serving Gateway (S-GW) 240, depending upon the arrangement of network elements. The S1-U 226 interface from the HeNB 210 may be terminated at the HeNB GW 220, or a direct logical U-Plane connection between HeNB and S-GW may be used.

S11 245: Standard interface between MME 230 and S-GW 240.

S6a 235: Standard interface between MME 230 and HSS 260.

C1 285: Optional interface between the CSG List Srv 250 and CSG-capable UEs 270. OTA is used to update the allowed CSG list on a UE 270 with a Rel-8 USIM. OMA DM is used to update the Allowed CSG list on a UE with a pre-Rel-8 USIM.

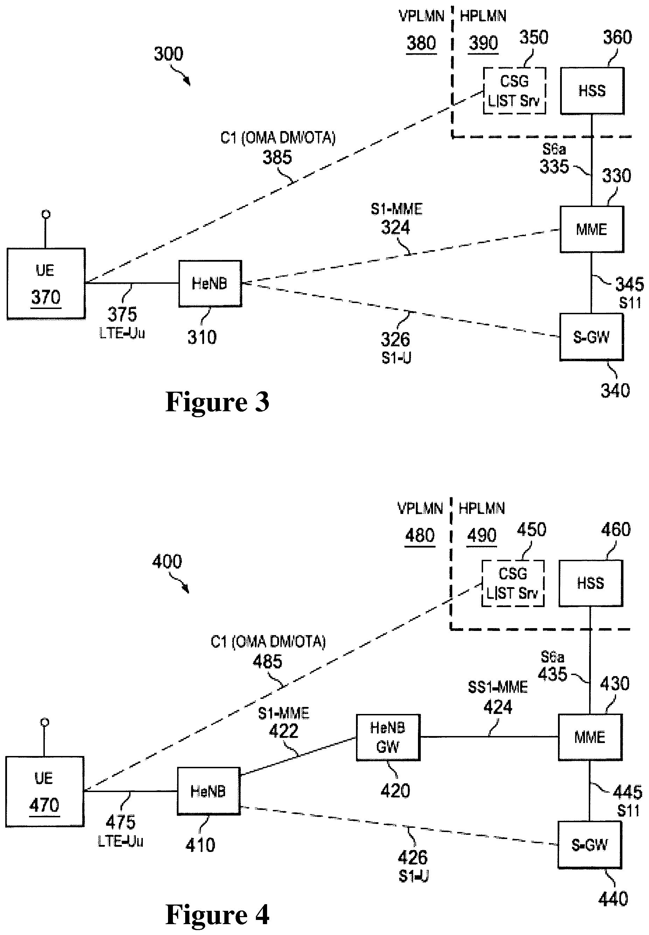

With reference to Figure 3, there is depicted an architecture model for a HeNB access network 300 which does not include a dedicated HeNB GW. In the depicted network 300, a single UE 370 is in communication with a HeNB 310 over reference point LTE-Uu 375. The HeNB 310 is in communication with a S-GW 340 over reference point S1-U 326, and is also in communication with MME 330 over reference point S1-MME 324. A CSG List Srv 350 and HSS 360 are part of a HPLMN 390. Networks that are not the HPLMN 390 on which the UE may operate are a VPLMN 380. The MME 330 is in communication with the HSS 360 over reference point S6a 335. The S-GW 340 is in communication with the MME 330 over reference point S11 345. The UE 370 is in communication with the CSG List Srv 350 over reference point C1 385.

With reference to Figure 4, there is depicted an architecture model for a HeNB access network 400 which includes a HeNB GW for the C-Plane. In the depicted network 400, a single UE 470 is in communication with a HeNB 410 over reference point LTE-Uu 475. The HeNB 410 is in communication with a S-GW 440 over reference point S1-U 426, and is also in communication with a HeNB-GW 420 over reference point S1-MME 422. The HeNB-GW 420 is in communication with MME 430 over reference point S1-MME 424. A CSG List Srv 450 and HSS 460 are part of a HPLMN 490. Networks that are not the HPLMN 490 on which the UE may operate are a VPLMN 480. The MME 430 is in communication with the HSS 460 over reference point S6a 435. The S-GW 440 is in communication with the MME 430 over reference point S11 445. The UE 470 is in communication with the CSG List Srv 450 over reference point C1 485.

### Overview of Local IP Access and Selective IP Traffic Offloading

Traditionally, the UE connects to services through a remote connection using a PDP Context towards a GGSN in the core network in the case of 2G/3G, and a PDN Connection to a PGW in the Evolved packet system (EPS). As will be appreciated, PDN connection procedures are described in 3GPP TS 23.401 ("General Packet Radio Service (GPRS) enhancements for Evolved Universal Terrestrial Radio Access Network (E-UTRAN) access") and 3GPP TS 24.301 ("Non-Access-Stratum (NAS) protocol for Evolved Packet System (EPS)"). Additional signal flow information relating to PDN connectivity setup and handover procedures is described in U.S. Patent Application No. 12/685,651 (filed January 11, 2006) and U.S. Patent Application No. 12/685662 (filed January 11, 2010), the disclosures of which are incorporated herein by reference in their entireties, as is fully set forth herein.

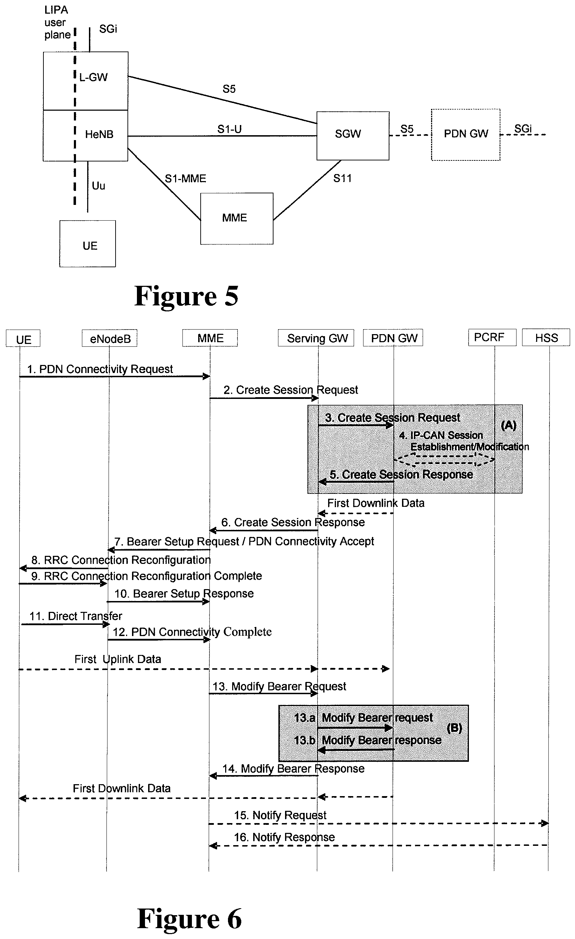

As explained above, 3GPP is introducing the concepts of local IP access (LIPA) and selective IP traffic offloading (SIPTO) to supplement the traditional way for connecting a UE to services through a remote connection (PDP Context towards a GGSN in the core network in the case of 2G/3G, and a PDN Connection to a PGW in the Evolved packet system (EPS). With LIPA and SIPTO connections, the UE is connected to a HNB/HeNB located in a home or corporate environment to obtain local connectivity, i.e. connectivity through the IP network local to the HNB (i.e. the (residential or enterprise) IP network in the HNB "home" premises). An example of this scenario is when a given application in the UE needs to print on a local printer, or an application needs to download an updated music playlist from a local media server. Several architectures for providing LIPA and SIPTO connections over HNB/HeNB cells will now be described with reference to Figures 5 and 6, where the difference between LIPA connectivity and normal connectivity is also highlighted.

Referring to Figure 5, there is depicted a schematic diagram of an example LIPA architecture for use in a HeNB cell using a local PDN connection. In the depicted architecture, a HeNB subsystem includes a HeNB, optionally a HeNB GW (not shown) and optionally a Local GW. The Local IP Access function is achieved using a Local GW (L-GW) colocated with the HeNB.

The HeNB subsystem is connected by means of the standard S1 interface to the EPC (Evolved Packet Core), more specifically to the MME (Mobility Management Entity) by means of the S1-MME interface and to the Serving Gateway (S-GW) by means of the S1-U interface. When LIPA is activated, the L-GW has a S5 interface with the S-GW. As used herein, the term eNodeB refers to the HeNB subsystem if the UE accesses the network via a HeNB unless stated otherwise. Also,detailed functions of HeNB and HeNB GW are described in 3GPP TS 36.300. The Local GW is the gateway towards the IP networks (e.g. residential/enterprise networks) associated with the HeNB. Apart from basic PDN GW functions (the PDN GW's basic functions are defined in clause 4.4.3.3 of 3GPP TS 23.401), the Local GW has the following functions:
- ECM-IDLE mode downlink packet buffering;
- ECM-CONNECTED mode direct tunnelling toward HeNB.

Referring now to Figure 6, there is depicted a schematic diagram of traffic flow for UE-requested PDN connectivity procedure for an E-UTRAN system. The depicted procedure allows the UE to request for connectivity to a PDN including allocation of a default bearer. The PDN connectivity procedure may trigger one or multiple Dedicated Bearer Establishment procedures to establish dedicated EPS bearer(s) for that UE.

An emergency attached UE shall not initiate any PDN Connectivity Request procedure. A normal attached UE shall request a PDN connection for emergency services when Emergency Service is required and an emergency PDN connection is not already active. As will be appreciated, the same procedure applies to the scenario where the UE is connected to a HeNB (i.e. the eNB in the procedure is actually a HeNB).

At signal 1, the UE initiates the UE Requested PDN procedure by the transmission of a PDN Connectivity Request (APN, PDN Type, Protocol Configuration Options, Request Type) message. If the UE was in ECM-IDLE mode, this NAS message is preceded by the Service Request procedure. PDN type indicates the requested IP version (IPv4, IPv4v6, IPv6). The MME verifies that the APN provided by UE is allowed by subscription. If the UE did not provide an APN, the MME shall use the APN from the default PDN subscription context, and, use this APN for the remainder of this procedure. Protocol Configuration Options (PCO) are used to transfer parameters between the UE and the PDN GW, and are sent transparently through the MME and the Serving GW. The Protocol Configuration Options may include the Address Allocation Preference, which indicates that the UE prefers to obtain an IPv4 address only after the default bearer activation by means of DHCPv4. If the UE has UTRAN or GERAN capabilities, it shall send the NRSU in the PCO to indicate the support of the network requested bearer control in UTRAN/GERAN. The Request Type indicates "initial request" if the UE requests new additional PDN connectivity over the 3GPP access network, for multiple PDN connections, the Request Type indicates "handover" when the UE is performing an handover from non-3GPP access and the UE has already established connectivity with the PDN over the non-3GPP access.

The UE shall indicate Request Type "Emergency" when it requests a PDN connection for emergency services. In case of LIPA, the UE can request the type of connectivity to be LIPA. This is not part of this disclosure.

At step 2, in the case of LIPA connections, the MME will perform the same functionality but will select a PDN GW appropriate to provide the LIPA connectivity. This is not part of this disclosure. In particular, if the MME receives a PDN Connectivity Request from an emergency attached UE or the PDN Connectivity Request is for normal services and the mobility or access restrictions do not allow the UE to access normal services the MME shall reject this request.

If the Request Type indicates "Emergency" and the MME is not configured to support PDN connections for emergency services the MME shall reject the PDN Connectivity Request with an appropriate reject cause.

If the Request Type indicates "Emergency", the MME derives a PDN GW from the MME Emergency Configuration Data or the MME selects a PDN GW (the procedure used for deriving PDN GW from the MME Emergency Configuration Data is described in clause 4.3.12.4 of 3GPP TS 23.401) on PDN GW Selection Function (3GPP accesses) according to the Emergency APN in the MME Emergency Configuration Data. This selection shall provide a PDN GW from visited PLMN only.

If the Request Type indicates "Emergency" and the MME is configured to support PDN connections for emergency services, it uses the MME Emergency Configuration Data for the bearer establishment in this step and ignores any subscription data limitation.

If the Request Type indicates "Handover", the MME uses the PDN GW stored in the Subscription Data retrieved by the MME during the Update Location performed at attach. If the Request Type indicates "initial request" the MME selects a PDN GW (the procedure used for selecting a PDN GW If the Request Type indicates "initial request", is described in clause 4.3.8.1 of 3GPP TS 23.401) on PDN GW Selection Function (3GPP accesses).

The MME allocates a Bearer Id, and sends a Create Session Request (IMSI, MSISDN, MME TEID for control plane, RAT type, PDN GW address, PDN Address, Default EPS Bearer QoS, PDN Type, subscribed APN-AMBR, APN, EPS Bearer Id, Protocol Configuration Options, Handover Indication, ME Identity, User Location Information (ECGI), User CSG Information, MS Info Change Reporting support indication, Selection Mode, Charging Characteristics, Trace Reference, Trace Type, Trigger Id, OMC Identity, Maximum APN Restriction, Dual Address Bearer Flag) message to the Serving GW.

The RAT type is provided in this message for the later PCC decision. The MSISDN is included if the MME has it stored for that UE. Handover Indication is included if the Request Type indicates "handover". Selection Mode indicates whether a subscribed APN was selected, or a non-subscribed APN sent by the UE was selected. The P GW may use Selection Mode when deciding whether to accept or reject the default bearer activation. For example, if an APN requires subscription, the P GW is configured to accept only the default bearer activation that requests a subscribed APN as indicated by Selection Mode. Charging Characteristics indicates which kind of charging the bearer context is liable for.

The charging characteristics for the PS subscription and individually subscribed APNs as well as the way of handling Charging Characteristics and whether to send them or not to the P GW is defined in 3GPP TS 32.251. The MME shall include Trace Reference, Trace Type, Trigger Id, and OMC Identity if S GW and/or P GW trace is activated. The MME shall copy Trace Reference, Trace Type, and OMC Identity from the trace information received from the HLR or OMC.

The Maximum APN Restriction denotes the most stringent restriction as required by any already active bearer context. If there are no already active bearer contexts, this value is set to the least restrictive type (see clause 15.4 of 3GPP TS 23.060). If the P GW receives the Maximum APN Restriction, then the P GW shall check if the Maximum APN Restriction value does not conflict with the APN Restriction value associated with this bearer context request. If there is no conflict the request shall be allowed, otherwise the request shall be rejected with sending an appropriate error cause to the UE.

If the PDN subscription context contains a subscribed IPv4 address and/or IPv6 prefix, the MME indicates it in the PDN address. The MME may change the requested PDN type according to the subscription data for this APN as described in clause 5.3.1.1 of 3GPP TS 23.401. The MME shall set the Dual Address Bearer Flag when the PDN type is set to IPv4v6 and all SGSNs which the UE may be handed over to are Release 8 or above supporting dual addressing, which is determined based on node pre-configuration by the operator.

The remaining steps are performed as in current specifications, though the SGW may be skipped and the PDN GW may be integrated with the HeNB.

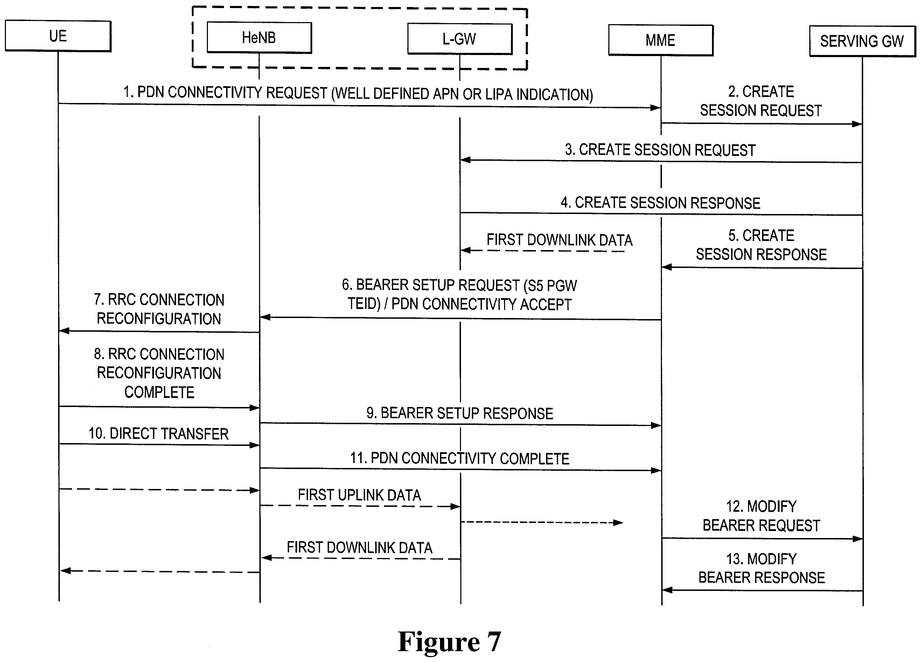

Turning now to Figure 7, there is depicted a schematic diagram of traffic flow for UE-requested PDN connectivity to LIPA. The depicted procedure illustrates the setup of LIPA PDN connection via the UE requested PDN connectivity request procedure. Similar changes would also apply to setup of LIPA PDN connection in the attach procedure.

In comparison with the existing call flow for UE requested PDN connection, the following steps are worth additional explanation:

At step 1, the UE initiates PDN connectivity request to establish PDN connection. An APN (possibly including a special LIPA indication) is included. The PDN subscription contexts provided by the HSS contain (optionally) for an APN, an indication of whether LIPA is conditional, prohibited, or only LIPA is supported for this APN. The MME may authorize the request for connectivity as a request for LIPA e.g. based on subscription information.

The S1-AP message that carries the PDN connectivity request includes the following additional parameters:
- L-GW IP address assigned during establishment of the IPsec tunnel(s);
- H(e)NB capability to support LIPA.

MME performs LIPA authorisation of the UE to decide whether the UE is allowed to use LIPA function or not according to the UE subscription data and the LIPA capability of the HeNB. The LIPA subscription data may be per APN, per CSG or both. The MME rejects the PDN connectivity request if the LIPA authorisation fails.

After successful LIPA authorisation, the MME uses the L-GW address provided in S1-AP signalling to select the L-GW collocated with HeNB.

At step 2, if there is a requirement to avoid IMSI storage in the L-GW (FFS), the MME omits the IMSI from the Create Session Request. The current condition in 3GPP TS 29.274 for not sending the IMSI ("If the UE is emergency attached and the UE is UICCless") may need to be extended to cover LIPA.

At step 6, the S1 control message includes a Correlation ID for enabling the direct user plane path between the HeNB and the L-GW. In Release 10, the Correlation ID is set equal to the user plane PDN GW TEID (GTP-based S5) or GRE key (PMIP-based S5) that the MME has received in step 5.

According to Release 10, mobility of the LIPA PDN connection is not supported, meaning that the LIPA PDN connection shall be released when the UE moves away from H(e)NB. Before starting the handover procedure towards the target RAN, the H(e)NB shall request using an intra-node signalling the collocated L-GW to release the LIPA PDN connection. The H(e)NB determines that the UE has a LIPA PDN connection from the presence of the Correlation ID in the UE (E-)RAB context. The L-GW shall then initiate and complete the release of the LIPA PDN connection using the PDN GW initiated bearer deactivation procedure as per clause 5.4.4.1 of 3GPP TS 23.401 or GGSN initiated PDP context deactivation procedure as specified in 3GPP TS 23.060. The H(e)NB shall not proceed with the handover preparation procedure towards the target RAN until the UE's (E-) RAB context is clear for the Correlation ID. At the handover, the source MME verifies that the LIPA PDN connection has been released; if it has not been released, the source MME rejects the handover. As will be appreciated, the direct signalling (implementation dependent) from the H(e)NB to the L-GW is only possible since mobility of the LIPA PDN connection is not supported in this release. Also, during idle state mobility events, the MME/SGSN shall deactivate the LIPA PDN connection when it detects that the UE has moved away from the HeNB.

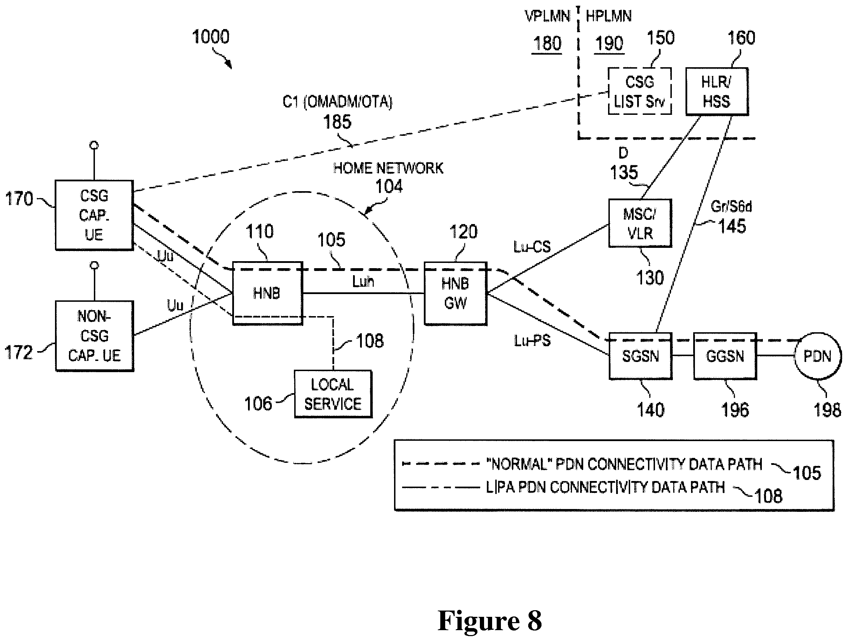

With reference to Figure 8, there is illustrated a schematic diagram of an example logical architecture network 1000 for use in a HNB cell illustrating Local IP connectivity. The depicted network 1000 is substantially the same as Figure 1 with the addition of a Gateway GPRS Support Node (GGSN) 196 connected to the SGSN 140, a PDN 198 connected to the GGSN 196, and a home network 104 that has an illustrated coverage area defined by the circle shape. LIPA PDN connectivity is illustrated from the UE 170 through the HNB 110 to the local service 106 via dotted line 108. Normal PDN connectivity via the core network (HNB GW 120, SGSN 140 and GGSN 196) is illustrated from the UE 170 to the PDN 198 via dashed line 105.

In the HNB scenarios, a UE 170 determines whether it has access to a given HNB 110 thanks to the UE 170 having knowledge of its belonging to a specific Closed Subscriber Group (CSG). The operator/owner of an HNB 110 creates list of CSGs and provisions the UEs 170, 172 with CSG lists so that the UE 170, 172 determines which HNBs it can connect to. Therefore, a UE 170, 172 that is moving in macro-coverage (i.e. in cellular cells not belonging to a CSG/HNB) may come across a CSG/HNB cell 104. The UE 170, 172 would use the CSG information to decide whether to attempt connection to such HNB 110 or not. CSG information is typically configured in the UE 170, 172 by the operator and can dynamically be modified, e.g. using OMA-DM (Device Management). USIM information to support LIPA is also foreseen. Some of this information may be managed by the H(e)NB hosting party too.

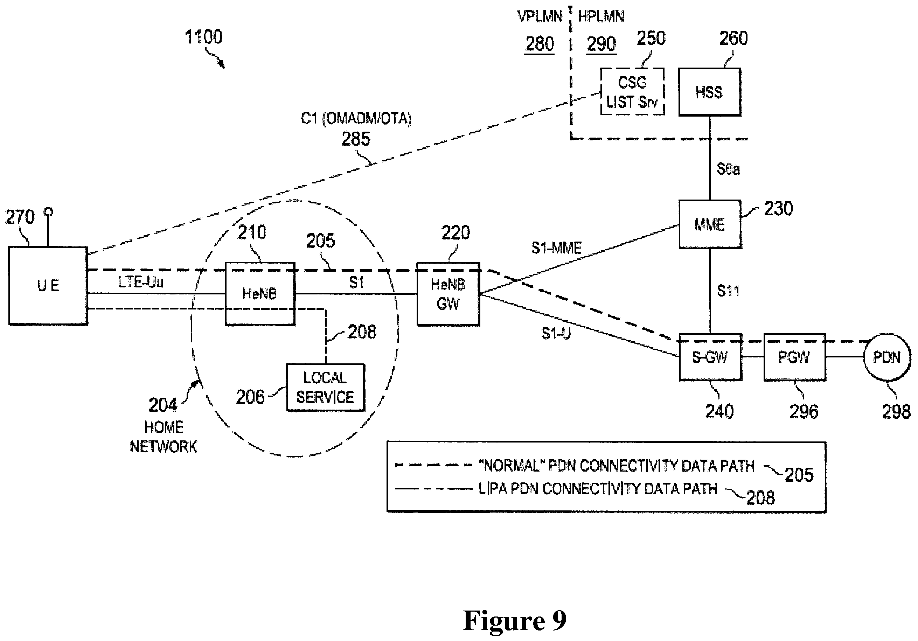

With reference to Figure 9, there is illustrated a schematic diagram of the example logical architecture network 1100 for use in a HeNB cell illustrating Local IP connectivity. The depicted network 1100 is substantially the same as Figure 2 with the addition of a PGW 296 connected to the S-GW 240, a PDN 298 connected to the PGW 296, and a home network 204 that has an illustrated coverage area defined by a circle shape. LIPA PDN connectivity is illustrated from the UE 270 through the HeNB 210 to the local service 206 via dotted line 208. Normal PDN connectivity via the core network (HeBN 210, HeNB GW 220, S-GW 240 and PGW 296) is illustrated from the UE 270 to the PDN 298 via dashed line 205. In the HeNB scenarios, a UE 270 also determines its access rights to the HeNB network 204 using the CSG list provided by the HeNB 210.

As will be appreciated, the relevant 3GPP specifications in this area include 3GPP TR 23.829 entitled "Local IP Access & Selected IP Traffic Offload" (which describes the mechanisms for IP traffic offloading) and 3GPP S2-096006 entitled "Terminology update to agreed text in TR 23.8xy" (which introduced LIPA and SIPTO functionalities and architectural aspects). In addition, 3GPP S2-096050 entitled "LIPA and SIPTO node functions" and 3GPP S2-096013 entitled "Internet offload for macro network" set forth the architectural principles for Solution 1 (Local IP Access and Selected IP Traffic Offload solution based on traffic breakout performed within H(e)NB using a local PDN connection) and Solution 2 (Local IP Access and Selected IP Traffic Offload at H(e)NB by NAT). 3GPP S2-095900 entitled "Architectural Requirements of Internet Offload" introduced the architectural requirement that traffic offload can be performed without user interaction, and that the impact on the existing network entities and procedures by introducing traffic offload be minimized.

Accordingly, a need exists for improved method, system and device for managing LIPA connection releases to overcome the problems in the art, such as outlined above. Further limitations and disadvantages of conventional processes and technologies will become apparent to one of skill in the art after reviewing the remainder of the present application with reference to the drawings and detailed description which follow.

### Management of LIPA/SIPTO Connection While Exchanging Messages Between Network Elements (e.g., SGSN device or MME device)

In some embodiments, a method, system and device are provided for managing LIPA and/or SIPTO connection releases at a network element by providing context information in either the context request message or response thereto exchanged between source and target Mobility Management Entity (MME) devices. In selected embodiments where a UE has only one PDN connection which is LIPA PDN connection, automatically releasing it when the UE leaves the residential/enterprise network coverage will cause the UE to be detached from the network as the UE does not have a PDN connection.

To address problems caused by not providing service continuity for LIPA/SIPTO PDN connection(s) where context associated with a PDN connection of a connectivity type is passed between network elements, a target network element (e.g., new MME) includes information in the Context Request message so that the source network element (e.g., previous MME) can determine if LIPA service continuity is provided or not. The information included in the Context Request message includes, but is not limited to, information identifying one or more resources being used by the UE, such as the ID of the resource(s), the id of the CSG, the L-GW address, the (e)NB/RNC identifier and/or one or more identifiers of one or more resources the UE is using.

In other embodiments, the source network element (e.g., previous MME) includes information in the Context Response message so that the target network element (e.g,. new MME) can determine whether the LIPA PDN connection needs to be released for the UE. The information included in the Context Response message includes, but is not limited to, information such as cell ID, L-GW IP address, CSG, and an indication if a PDN connection is a LIPA PDN Connection or is a PDN Connection according to another connectivity type or not (i.e. a regular PDN connection as supported in legacy or 3GPP Rel-9 or less compliant networks).

In still further embodiments where LIPA dedicated bearers are not supported (such as with LTE Rel. 10 which supports only the default bearer for LIPA), the network element (e.g., the MME) rejects a BEARER RESOURCE ALLOCATION REQUEST if the requested bearer resource belongs to LIPA PDN connection based on Linked EPS bearer identity IE in the message.

Furthermore, when passing the contexts to another network element (e.g., target MME or SGSN), the new network element is expected to behave in accordance with the limitations imposed by the source network element. To prevent confusion at the user, the network element includes information, such as an ESM cause value, so that the user can determine the limitations imposed by the network element.

In addition or in the alternative, the Context Request message received by a source network element (e.g., MME/SGSN) from a target network element can include a first identifier (e.g., cell identifier) indicating that LIPA PDN Connections can be received. In addition or in the alternative, the source network element can use the first identifier to determine that the target network element supports 3GPP Rel-10 LIPA restrictions, e.g. the 3GPP Rel-10 LIPA restrictions including that only default bearers for LIPA PDN connections are permitted.

Alternatively, if the Context Request message received by a source network element from a target network element includes at least a second identifier (for example, the Context Request message does not include the CSG id or L-GW address), then the source can use the second identifier to determine that the target supports another set of restrictions (e.g., the other set of restrictions excluding that only default bearers for LIPA PDN connections are permitted).

Various illustrative embodiments of the present disclosure will now be described in detail with reference to the accompanying figures. While various details are set forth in the following description, it will be appreciated that the embodiments may be practiced without these specific details, and that numerous implementation-specific decisions may be made to the embodiments described herein to achieve the device designer's specific goals, such as compliance with process technology or design-related constraints, which will vary from one implementation to another.

While such a development effort might be complex and time-consuming, it would nevertheless be a routine undertaking for those of ordinary skill in the art having the benefit of this disclosure. For example, selected aspects are shown in block diagram and flow chart form, rather than in detail, in order to avoid limiting or obscuring the present disclosure. In addition, some portions of the detailed descriptions provided herein are presented in terms of algorithms or operations on data within a computer memory. Such descriptions and representations are used by those skilled in the art to describe and convey the substance of their work to others skilled in the art. Various illustrative embodiments of the present disclosure will now be described in detail below with reference to the figures.

Ongoing 3GPP discussions have addressed the treatment of LIPA/SIPTO PDN connection releases associated with UE mobility. In these discussions, one of schemes does not provide service continuity for a LIPA PDN connection if the UE moves out of the coverage of the residential/enterprise network, and instead to release the LIPA PDN connection. This scheme for releasing connections is based on a number of factors. First, there is a concern that Lawful Interception will be applied to local IP resource access if the UE resides in macro (e)NB's coverage and service continuity is maintained. The term "Lawful Interception" refers to an action, performed by a network operator, access provider, and/or service provider, of making available certain information and providing that information to a law enforcement monitoring facility. Also, it will be difficult to establish charging schemes which change as the UE moves from H(e)NB to macro (e)NB. There may also be authentication complications involved with maintaining service continuity.

Based on these discussions, Release 10 of 3GPP S1-100316 entitled "Mobility for Local IP Access (LIPA)" and of 3GPP S1-100321 entitled "SIPTO requirements common for macro network and H(e)NB subsystems" specifies that mobility of a LIPA connection to macro network is not supported, whereas mobility of the LIPA connection between H(e)NBs in the same residential/enterprise network is supported/required. In addition, Release 10 of 3GPP S1-100321 entitled "SIPTO requirements common for macro network and H(e)NB subsystems" specifies that mobility of a SIPTO connection within the macro network shall be supported, and mobility from H(e)NB to macro and between H(e)NB may be supported.

In view of the scheme against maintaining service continuity for LIPA connections when the UE leaves the residential/enterprise network coverage, there are a number of different problems created resulting in unwanted UE disconnections. As explained more fully below, these release problems have multiple dimensions, including problems with PS services when there is UE mobility in connected mode, problems triggered by CSFB procedures when there is UE mobility in connected mode, and problems with or without ISR when there is UE mobility in idle mode. In discussing these problems, consideration should be given to LIPA mechanisms which also work for pre-Release 10 UEs (i.e., UEs that are not aware of LIPA connectivity, such as occurs when the network provides LIPA connectivity to the UE based on subscription profile or network decision, without the UE being aware of such decision). For such UEs, NAS signaling and mechanism cannot be modified in order to resolve the identified problems.

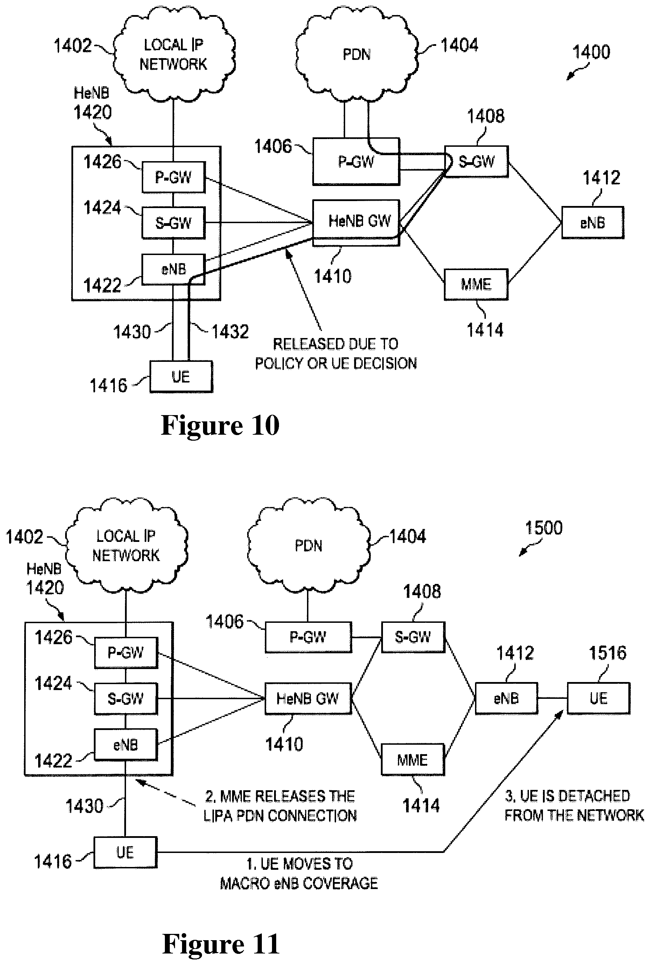

For purposes of illustrating the UE disconnect problem, reference is now made to Figures 10-11 which schematically illustrate the release of a LIPA PDN connection as the UE moves outside the HeNb enterprise network coverage, where the term "PDN connection" refers both to a PDN Connection involving a HeNB and a PDP Context involving a HNB unless explicitly indicated.

In particular, Figure 10 is a schematic diagram of traffic flows in an HeNB subsystem 1400 in which the UE 1416 has a LIPA/SIPTO PDN connection 1430 and a core network (CN) PDN connection 1432. With the LIPA/SIPTO PDN connection 1430 established, user plane traffic for LIPA and SIPTO does not go through the core network connection 1432. Instead, the traffic goes from UE 1416 through the Local eNB 1422, Local S-GW 1424, and Local P-GW 1426, which are illustrated to all be collocated in HeNB 1420, as indicated with line 1430. If the UE 1416 has an additional, non-LIPA, non-SIPTO PDN connection, the traffic goes through the HeNB-GW 1410, S-GW 1408, and P-GW 1406 to the core PDN 1404 as indicated with line 1432. Since the second PDN connection 1432 can be released at any time (e.g., due to pre-defined policy or UE configuration), there are times when the UE 1416 has only one PDN connection when connected to the H(e)NB 1420, and such PDN connection is a LIPA PDN connection 1430.

To illustrate the UE disconnect problem, reference is now made to Figure 11 which depicts a schematic diagram of traffic flows in an HeNB subsystem 1500 in which the UE 1416 moves outside of HeBN coverage when it has only a LIPA PDN connection. In this case, the reference to moving "outside the H(e)NB" indicates both case of the UE moving from a H(e)NB cell to macro cell coverage, and the case of the UE moving between H(e)NB cells for which LIPA PDN continuity is not supported (e.g. H(e)NBs with different CSGs). It may be that LIPA PDN continuity is not supported between any H(e)NB cell.

Thus, Figure 11 illustrates that the UE 1416 moves towards a second position 1516 where there is macro coverage, though the UE 1416 could also move to another H(e)NB for which LIPA PDN continuity is not supported. As soon as the MME 1414 detects that the UE is not connected to the H(e)NB 1420 (e.g. the UE has moved to a different cell where LIPA continuity is not supported), the MME 1414 releases the LIPA PDN connection 1430 since there is no requirement of maintaining LIPA PDN connectivity. As a result, there is no PDN connection for the UE 1516. As described more fully below, the MME 1414 can detect that the UE 1516 is out of coverage of the H(e)NB 1420 based on a variety of detection mechanisms, such as when the UE 1516 performs a Tracking Area Update (TAU) or Routing Area Update (RAU) from a different cell, or when the UE 1516 responds to paging from a different cell, etc.

In E-UTRAN, a UE has to maintain at least one PDN connection for the UE to be considered attached to the network. If there is no PDN connection, the UE is detached from the network. Figure 11 shows how the disconnect problem arises when a UE 1416 has only a single, active LIPA PDN connection 1430, and the MME 1414 releases the LIPA PDN connection 1430 upon detecting that the UE 1416 has moved to a new position which is not connected to the H(e)NB 1420 anymore. When detachment occurs, the UE 1516 may not know why it is being detached and why the LIPA PDN connection 1430 is being released, and is then forced to re-attach to the network. This issue applies both for NAS idle mode mobility and NAS connected mode mobility.

As will be appreciated, while the foregoing discussion refers to LIPA PDN connections, the same challenges apply to a LIPA PDP Context (in case of HNB) or the SIPTO Local connectivity, unless explicitly indicated. And though not explicitly shown, it will also be appreciated that similar problems arise when UE mobility is from the H(e)NB 1420 towards GERAN/UTRAN (i.e. involving a SGSN), in which case the active PDP context (corresponding to the LIPA connection) needs to be deactivated, even if the UE does not need to be detached.

Based on recent decisions, it appears that mobility of the LIPA connection is not supported in Release 10 so that, if a UE leaves the coverage of the original H(e)NB coverage, the LIPA PDN connection shall be released. In Release 11, mobility of the LIPA connection between H(e)NBs in the same residential/enterprise network will be supported. There has been no conclusive decision on LIPA mobility between H(e)NB and macro eNB has been made yet. In Release 10, mobility of a SIPTO connection within the macro network shall be supported. In Release 11, mobility from H(e)NB to macro and between H(e)NB may be supported. In Release 11, it is expected that the mobility within the H(e)NB subsystem is provided. It may still be required to release LIPA PDN connection as the UE moves out of H(e)NB subsystem, in which H(e)NBs belong to the same CSG.

While the discussion herein refers to "LIPA PDN connection," it will be appreciated that the same or similar principles can also apply to a LIPA PDP Context (in case of HNB, SGSN and GGSN) or the SIPTO Local connectivity, unless explicitly indicated. 3GPP TS 24.301 provides the following definition for LIPA PDN connection which can also addresses PDP contexts:
***LIPA PDN connection:** a PDN connection, for which the default EPS bearer context or default PDP context was activated with an APN authorized to use LIPA. The network authorizes an APN for using LIPA based on the subscription profile (see 3GPP TS 23.401 clause 5.7.2 and subsequently the network considers this PDN connection a LIPA PDN connection.*

It has also been agreed that if the UE is in CONNECTED mode, LIPA PDN connection will be released by L-GW before the UE performs HO from the cell at which the UE established the LIPA PDN connection.

In the following text, references to the UE with a LIPA/SIPTO PDN connection performing mobility "outside the H(e)NB" are used to indicate both the case of the UE moving from a H(e)NB cell to macro cell coverage and the case of the UE moving between H(e)NB cells for which LIPA PDN continuity is not supported (e.g. H(e)NBs with different CSGs). It may be that LIPA PDN continuity is not supported between any H(e)NB cell. A H(e)NB cell is a cell belonging to a H(e)NB. If a UE is camping in a H(e)NB cell, the UE is associated with the H(e)NB of that cell. A macro cell is a cell belonging to an eNB or RNC. If a UE is camping in a macro cell, the UE is associated with the eNB or RNC of that cell.

The release of a LIPA PDN connection when the UE moves from a H(e)NB (cell) to a cell for which LIPA Continuity is not supported (e.g. a macro cell) has multiple dimensions:
- Connected mobility for PS services
- Connected mobility triggered by CSFB procedures (with or without PS HO)
- Idle mobility without ISR
- Idle mobility with ISR

In the following, unless explicitly indicated, the term "PDN connection" refers both to a PDN Connection involving a HeNB and a PDP Context involving a H(e)NB.

Instead of addressing situations where UE movement is detected, the present disclosure addresses situations where context associated with a PDN connection of a connectivity type is passed between network elements. Examples of such situations include, but are not limited to: Receipt of a TAU due to load balancing if the network element is a MME; HO between MMEs; CSFB, where context is passed between MME and SGSN; and the case where ISR is active, where context is maintained in multiple network nodes.

As will be appreciated, network elements (such as MMEs and SGSNs) that communicate contexts may not all be supporting the same 3GPP release. As a result, all network elements in a network may not support the same set of functions.

Thus, the procedures for communicating connectivity types should be robust and address the case where functionalities may or may not exist in network elements. For example, 3GPP TS 24.401 provides that "For this release of the specification there is no support for Dedicated bearers on the PDN connection used for Local IP Access. The Local GW (L-GW) shall reject any UE requested bearer resource modification." However, future releases may specify support for Dedicated bearers on the PDN connection used for connectivity type, such as LIPA or SIPTO-HeNB.

In this framework, a number of problem cases associated with LIPA connection releases are identified and discussed in relation to Figure 11 more fully below. In addition, embodiments for managing the various connection release problems are identified and discussed as set forth below.

### Tracking Area Update (TAU) (Problem 1)

Suppose that a UE has one or more LIPA PDN connection and the UE enters into IDLE mode. Before the UE enters into IDLE mode, the UE was associated with an MME, MME-1. Due to a TAU triggering event, the UE may perform the Tracking Area Update (TAU) procedure. When performing the Tracking Area Update (TAU) procedure, the UE may send a (combined) Tracking Area Update request message to the network. An MME (e.g. MME-1) in the network may receive the (combined) Tracking Area Update request message from the UE. The TAU triggering events are as followings:
- UE detects it has entered a new TA that is not in the list of TAIs that the UE registered with the network (except for the case of a UE configured for MTC entering a TA in a new PLMN, in which case an E-UTRAN Attach shall be performed);
- the periodic TA update timer has expired;
- UE was in UTRAN PMM_Connected state (e.g. URA_PCH) when it reselects to E-UTRAN;
- UE was in GPRS READY state when it reselects to E-UTRAN;
- the TIN indicates "P-TMSI" when the UE reselects to E-UTRAN (e.g. due to bearer configuration modifications performed on GERAN/UTRAN);
- the RRC connection was released with release cause "load re-balancing TAU required";
- the RRC layer in the UE informs the UE's NAS layer that an RRC connection failure (in either E-UTRAN or UTRAN) has occurred;
- a change of the UE Network Capability and/or MS Network Capability and/or UE Specific DRX Parameters and/or MS Radio Access capability (e.g. due to GERAN radio capability change or CDMA 2000 Radio Access Technology Capability change) information of the UE.
- for a SR-VCC capable UE, a change of MS Classmark 2 and/or MS Classmark 3 and/or Supported Codecs.
- UE manually selects a CSG cell whose CSG ID is absent from both the UE's Allowed CSG list and the UE's Operator CSG list.

It is possible that the (combined) TAU message is transferred to another MME than MME-1, e.g. MME-2, which is different from the previously associated MME, MME-1 (e.g., due to a "Triggers for tracking area update" such as the detection of *"load re-balancing"*)*.* When an MME receives the TAU message, it may perform the (combined) TAU procedure. If MME-2 receives the TAU request, the new MME, MME-2, shall send a Context Request message to the old MME, MME-1, as a part of the (combined) TAU procedure to get the MM and EPS bearer Contexts for the UE that send the (combined) TAU request message.

As indicated by 3GPP TS 23.401, MME-1 (the source MME) can always exclude LIPA bearer(s) in the EPS bearer Context during Tracking Area Update procedure and the source MME will release these LIPA PDN connections by triggering the MME requested PDN disconnection procedure specified in clause 5.10.3 of 3GPP TS 23.401. This results from the current Tracking Area Update procedures, wherein a standalone tracking area update (with or without S-GW change) occurs when a GPRS-attached or E-UTRAN-attached UE detects that the RRC connection was released with release cause "load re-balancing TAU required." If LIPA is active for a PDN connection of the UE, the source MME shall not include LIPA bearer(s) in the EPS bearer Context during Tracking Area Update procedure and shall release this LIPA PDN connections by triggering the MME requested PDN disconnection procedure specified in clause 5.10.3 of 3GPP TS 23.401 after it responds with the Context Response message in the case of inter-MME/SGSN mobility or after it receives Tracking Area Update Request in the case of intra-MME mobility.

In some instances, on receiving the Context Request message, the old MME (alternatively referred to as "source MME"), MME-1, needs to detect that the UE has moved to a new cell or is connected to different resources where LIPA service continuity is not provided and subsequently deactivate the LIPA PDN connection. Additionally, the MME-1 can omit MME/SGSN UE EPS PDN Connections IE for the LIPA PDN connections.

Additionally, the LIPA PDN connection may be inappropriately or unnecessary released if the TAU is triggered by the RRC connection release with release cause "Load Re-balancing TAU required." When the UE receives this message, a TAU request may be directed to a new MME (alternatively referred to as "target MME"), MME-2 even if the UE has not moved or may still be using the same cell or CSG or using the same resources (as e.g. evidenced by the L-GW IP address not changing or being identical).

In this case, the old MME, MME-1, is unable to determine if the UE has or has not moved to a new cell where LIPA service continuity is not provided. In 3GPP LTE Release 11 and previous specifications, the Context Request messages do not provide the UE's location information, CSG or other resource identifiers.

Also, LIPA mobility within the residential/enterprise network may be supported in the future. Systems (e.g. MME/SGSN and H(e)NB subsystems, each conforming to different 3GPP specification requirements) that do support LIPA/SIPTO mobility need to coexist with systems that don't. It is possible that a TAU message is directed to a new MME even when the UE remains in the same residential/enterprise network or even when the UE remains in the same CSG. At present, the old MME does not have a way to determine if the current cell the UE is accessing belongs to the same residential/enterprise network.

### No Support for LIPA Dedicated Bearer in 3GPP Release 10 (Problem 2)

There are also problem cases that arise when the LIPA dedicated bearer is not supported (e.g., with Rel. 10 where only default bearer for LIPA is supported). In this setting, a default bearer can be defined as "The EPS bearer which is first established for a new PDN connection and remains established throughout the lifetime of the PDN connection."

Under the existing approach, any dedicated bearer request shall be rejected by the network due to the fact that L-GW may not have access to Policy Control and Charging Rules Function (PCRF) or like Function. It was agreed in that L-GW shall reject any bearer resource modification request. This assumes that MME is transparent of this restriction. However, rejection from L-GW does not resolve all the existing issues on no support of dedicated bearers for LIPA.

Upon receipt of the BEARER RESOURCE ALLOCATION REQUEST message, the MME checks whether the resources requested by the UE can be established by verifying the EPS bearer identity given in the Linked EPS bearer identity IE to be any of the active default EPS bearer context(s).

If the bearer resource allocation requested is accepted by the network, the MME shall initiate either a dedicated EPS bearer context activation procedure by sending a Bearer Resource Command to the S-GW. The S-GW shall forward the Bearer Resource Command to the P-GW, which is L-GW in LIPA case. As a Dedicated Bearer is requested for LIPA PDN connection, the L-GW shall reject the request by sending a Bearer Resource Failure Indication to the S-GW and the S-GW will forward the Bearer Resource Failure Indication to the MME. The MME shall send BEARER RESOURCE ALLOCATION REJECT message to the UE on receiving the Bearer Resource Failure Indication.

Even though the aforementioned procedure follows current specifications, Bearer Resource Command from MME to L-GW and Bearer Resource Failure Indication from L-GW to MME is meaningless overhead if it is regarding a Dedicated Bearer for LIPA PDN connection. If MME rejects the BEARER RESOURCE ALLOCATION REQUEST message from the UE directly, this overhead can be avoided.

When MME sends a BEARER RESOURCE ALLOCATION REJECT message on receipt of a Bearer Resource Failure Indication initiated by L-GW, MME may set ESM cause value to #30 "request rejected by Serving GW or PDN GW" if the MME is not aware of restriction related to LIPA dedicated bearer. The cause value may allow the UE to keep retrying, which causes considerable overhead on the network. The MME shall be able to set the ESM cause value properly to prevent the UE from retrying.

In view of the foregoing problem cases associated with LIPA connection releases, there are described and disclosed herein various embodiments that may be applied to manage the identified connection release problems at the network element level. In one embodiment, context information may be provided in either the context request message or response thereto exchanged between source and target Mobility Management Entity (MME) devices to manage LIPA release procedures.

In selected embodiments, a target network element (e.g., new MME) includes information (e.g., the ID of the resource(s), the identifier (id) of the CSG, the L-GW address, the (e)NB/RNC identifier and/or one or more identifiers of one or more resources the UE is using) in the Context Request message so that the source network element (e.g., previous MME) can determine if LIPA service continuity is provided or not. In other embodiments, the source network element (e.g., previous MME) includes information (e.g., cell ID, L-GW IP address, CSG, and an indication if a PDN connection is a LIPA PDN Connection or is a PDN Connection according to another connectivity type or not) in the Context Response message so that the target network element (e.g., new MME) can determine whether the LIPA PDN connection needs to be released for the UE.

### Embodiment A

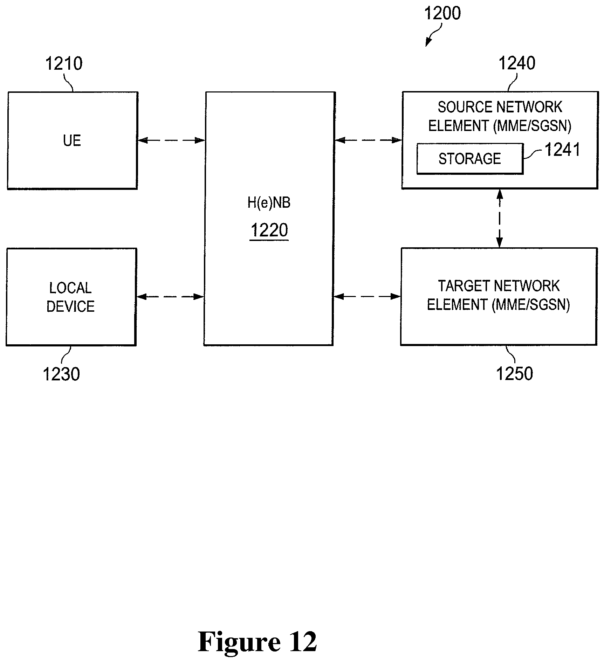

Referring to Figure 12, a method of transferring context information between a source network element and a target network element according to one embodiment will be described below. In the illustrated embodiment, a communication network 1200 includes a user equipment (UE) 1210, a home (enhanced) node B (H(e)NB) 1220, a local device 1230, a source (old) network element 1240, and a target (new) network element 1250. In one embodiment, each of the network elements 1240, 1250 can be one of MME, SGSN, or MME/SGSN.

The UE 1210 can be a device operating in compliance with 3GPP LTE standards. The UE 1210 can be also capable of accessing local devices having an IP address via, for example, a local area network.

Examples of user equipments include, but are not limited to, a mobile phone, a smart phone, a telephone, a television, a remote controller, a set-top box, a computer monitor, a computer (including a tablet computer such as Blackberry Playbook®, a desktop computer, a handheld or laptop computer, a netbook computer), a personal digital assistant (PDA), a microwave, a refrigerator, a stereo system, a cassette recorder or player, a DVD player or recorder, a CD player or recorder, a VCR, an MP3 player, a radio, a camcorder, a camera, a digital camera, a portable memory chip, a washer, a dryer, a washer/dryer, a copier, a facsimile machine, a scanner, a multi functional peripheral device, a wrist watch, a clock, a game device, etc. Such a UE might include a device and its associated removable memory module, such as a Universal Integrated Circuit Card (UICC) that includes a Subscriber Identity Module (SIM) application, a Universal Subscriber Identity Module (USIM) application, or a Removable User Identity Module (R-UIM) application. Alternatively, such a UE might include the device itself without such a module. The term "UE" can also refer to any hardware or software component that can terminate a communication session for a user. In addition, the terms "user equipment," "UE," "user equipment device," "user agent," "UA," "user device," and "mobile device" can be used synonymously herein.

The H(e)NB 1220 can be an enhanced node B for supporting a femto cell in compliance with 3GPP LTE standards. The H(e)NB 1220 can also be referred to as a "femto (e)NB."

The local device 1230 can be any type of local wireless or wired device that has an IP address. Examples of local devices can include, but are not limited to, a printer, a multi-function peripheral (MFP) device, media server, modem, router, and gateway.

The source (old) network element 1240 can be one of several network elements in the network 1200. The source network element 1240 can be the one which is currently communicating with the UE 1210 via the H(e)NB 1220 for various network functions, including internet access and/or local IP access. The source network element 1240 can include information on such network functions. In one embodiment, the source network element 1240 can include storage 1241 that contains Mobility Management (MM) and EPS bearer contexts for UEs that are served by the network element 1240. The contexts can include, for example, MME/SGSN UE MM Context, SGW address and node name, APN, one or more IP addresses of the UE, PGW S5/S8 IP Address for Control Plane or PMIP, PGW node name, Bearer Contexts, cell identity, and/or CSG identifier (see, for example, parts of tables 7.3.6-1, 7.3.6-2, 7.3.6-3 set forth below).

The target (new) network element 1250 can be another of the MMEs in the network 1200. The target network element 1250 can be, for example, the one which can communicate with the UE 1210 via the H(e)NB 1220, in place of the source network element 1240. In some embodiments, the network 1200 can have a priority or preference over MMEs that can support the UE 1210. If the source network element 1240 is too overloaded to support the UE 1210, the target network element 1250 can be used to support the UE 1210 in place of the source network element 1240.

In the illustrated embodiment, the UE 1210 can transmit a request message for connectivity with access point name (APN) to the source network element 1240 via the H(e)NB 1220. The source network element 1240 can consider packet data network (PDN) connection requested (via the request message for connectivity) as a local IP access (LIPA) PDN connection.

Then, the source network element 1240 can transmit a response message in response to the request for connectivity with APN. The response message can be sent to the UE 1210 via the H(e)NB 1220. Subsequently, the UE 1210 can transmit a Tracking Area Update request message (e.g., due to load re-balancing) to the target network element 1250 via the H(e)NB 1220. The Tracking Area Update request message transmitted by the UE 1210 may be transmitted due to receiving an indication from the network element that load re-balancing is required.

Then, the target network element 1250 can send the source network element 1240 a context request message, requesting one or more contexts for connectivity between the UE 1210 and one or more IP gateways (not shown). The IP gateway may be a Local IP GW or L-GW.

The source network element 1240 can determine that at least one of the one or more contexts provides connectivity between the UE and a local IP gateway. Then, the source network element 1240 can send the target network element 1250 a response to the context request message. In one embodiment, the response can exclude the at least one of the one or more contexts, subject to a condition. Upon receiving the response, the target network element 1250 can send the source network element 1240 an acknowledgment message. The target network element 1250 can also send the UE 1210 a response message to the Tracking Area Update Request via the H(e)NB 1220.

The operations between the source network element 1240 and the target network element 1250 will be described in more detail below. In some embodiments, the target (new) network element can include (1) the ID of a resource, the id of a CSG, an L-GW address, and/or an (e)NB/RNC identifier, or (2) one or more identifiers of one or more resources (which the UE is using) in the Context Request message. The old network element or source network element can determine if the context Request message includes the ID of the resource, the id of the CSG, the L-GW address, and/or the (e)NB/RNC identifier, or one or more identifiers of one or more resources that the UE is using. The old network element or source network element can use the context request message contents to determine if LIPA service continuity is provided or not.

If the Context Request message includes predetermined information (e.g., the ID of the resource, the id of the CSG, the L-GW address, and/or the (e)NB/RNC identifier, or one or more identifiers of one or more resources the UE is using) that is detected by the old network element or source network element, the old network element or source network element can compare one or more of them with the information stored (in the table 1241) with the context that was activated with an APN authorized to use LIPA. Subject to the matching, the old network element or source network element can include the context that was activated with an APN authorized to use LIPA in the response to the Context Request message; or does not include the context that was activated with an APN authorized to use LIPA in the response to the Context Request message. Further, the old network element or source network element can release the LIPA PDN connections by triggering the network element requested PDN disconnection procedure after it responds with the Context Response message. Alternatively, if no active (EPS bearer) contexts remain, the network implicitly detaches the UE.

Alternatively, if the Context Request message does not include predetermined information (e.g., the ID of the resource, the id of the CSG, the L-GW address, and/or the (e)NB/RNC identifier, or one or more identifiers of one or more resources the UE is using), the old network element or source network element, the old network element or source network element does not include the context that was activated with an APN authorized to use LIPA in the response to the Context Request message. Further, the old network element or source network element can release the LIPA PDN connections by triggering the network element requested PDN disconnection procedure after it responds with the Context Response message. Alternatively, if no active (EPS bearer) contexts remain, the network implicitly detaches the UE.

It should be noted that the source network element or old network element shown in Figure 12 need not be aware of the capabilities of the sender of the context request message (flow 5). Additionally, the network element in the RAN need not have provided the identifiers (such as the cell id, e.g. the RNC need not provide the cell id). If the request however doesn't include the identifiers, the source network element or old network element GSN can be sure LIPA is not supported in selected embodiments.

As disclosed herein, the Context Request message (or Context Response message) uses one or more identifiers to indicate whether the UE using at least one or more resources where LIPA service continuity is not provided at the target network element. In other embodiments, the network element having received the (combined) TAU request message includes one or more identifiers which the UE is using in the Context Request message. The old network element detects the identifiers and determines if the PDN connection is still using resources that can support the LIPA or SIPTO PDN Connection based on one or more identifiers stored when a LIPA or SIPTO PDN connection was authorized/requested/activated. If the used resources support the LIPA or SIPTO PDN connection or subscription policy or HeNB Subsystem operator policy or serving network operator policy continue to allow this PDN connection then Context Request response message sent form the old network element and received by the new network element does contain the PDN connection context information associated with the LIPA PDN connection or SIPTO PDN connection or other connectivity type PDN connection. Otherwise, the Context Request response message does not contain the contexts associated with the LIPA or SIPTO PDN connection.

If the new network element does not support LIPA or SIPTO or other forms of offloading, for example because the network element is not enhanced to support LIPA or SIPTO or other forms of offloading, then the network element may not include the one or more identifiers in the Context Request message. The old network element, receiving a Context Request message not including the one or more identifiers, will in such a case not include contexts associated with the LIPA or SIPTO PDN connection in a Context Request response message sent to the new network element.

The old network element will, if not including these contexts, also inform the S-GW and L-GW or PGW or GGSN and terminate the portion of the LIPA PDN connection between S-GW/SGSN and L-GW or P-GW or GGSN before the old network element sends the Context Response message to the new network element.

As described herein, the one or more identifiers may include, but are not limited to, at least one of resource id or cell id or the id of the CSG or the L-GW address or the (e)NB/RNC identifier. When the new network element includes in the Context Request message the Cell ID and CSG ID of the cell the UE is accessing for the TAU request message, the old network element , upon receiving the Context Request message, may be configured to release the LIPA PDN connection by triggering the network element requested PDN disconnection procedure if the old network element detects that LIPA is active for a PDN connection of the UE based on the stored EPS bearer context information, or if the old network element determines that the LIPA service continuity is not provided at the cell the UE is accessing based on Cell ID or the combination of Cell ID and CSG ID in the Context Request message.

In Release 10, the service continuity is not provided if the cell the UE is accessing is different from the cell in which the UE initiated the LIPA PDN connection. In later releases, different level of LIPA service continuity may be provided. In this case, the old network element can determines if LIPA service continuity is provided at the cell the UE is accessing based on the combination of cell ID and CSG ID. If the old network element released LIPA PDN connection(s), the old network element shall not include LIPA bearer context(s) in the Context Response message. If the UE has no other PDN connection after LIPA PDN release then the old network element shall initiate network element-initiated Detach Procedure. Thus, this embodiment can be applied to expanded LIPA mobility cases which will be decided in later release as well as the case where TAU is performed to a new network element for load re-balancing purpose.

In one embodiment, the scheme described above can be performed in the context of 3GPP LTE TS 29.274, sections 7.3.5 to 7.3.7, which are related to Context Request, Context Response, and Context Acknowledge. Changed portions of the specification of 3GPP LTE TS 29.274, sections 7.3.5 to 7.3.7 are set forth below.

### 7.3.5 Context Request

The new MME/SGSN shall send the Context Request message to the old MME/SGSN on S3/S16/S10 interface as a part of TAU/RAU procedure to get the MM and EPS bearer Contexts for the UE.

If the sending/new node is a MME, it shall include in the Context Request message:
- the GUTI IE and Complete TAU Request Message IE if the GUTI received from UE indicates the old node is a MME.
- the RAI IE and the P-TMSI IE, which are derived from the GUTI received from UE, and the P-TMSI Signature that was received intact from the UE, if the GUTI indicates the old node is an SGSN.
- a cell identity, if a cell identity is received with the TRACKING AREA UPDATE REQUEST message as a part of the TAU/RAU procedure, and the MME is configured to support LIPA.
- a L-GW (IP) address, if a L-GW (IP) address is received with the TRACKING AREA UPDATE REQUEST message as a part of the TAU/RAU procedure, and the MME is configured to support LIPA.
- a CSG identifier, if a CSG identifier is received with the TRACKING AREA UPDATE REQUEST message as a part of the TAU/RAU procedure, and the MME is configured to support LIPA.

If the sending/new node is an SGSN, it shall include RAI IE, P-TMSI IE and P-TMSI Signature IE in the Context Request message. If the receiving/old node is an MME, it shall:
- include a cell identity, if a cell identity is received with the ROUTING AREA UPDATE REQUEST message as a part of the TAU/RAU procedure, and the SGSN is configured to support LIPA.
- include a L-GW (IP) address, if a L-GW (IP) address is received with the ROUTING AREA UPDATE REQUEST message as a part of the TAU/RAU procedure, and the SGSN is configured to support LIPA.
- include a CSG identifier, if a CSG identifier is received with the ROUTING AREA UPDATE REQUEST message as a part of the TAU/RAU procedure, and the SGSN is configured to support LIPA.
- construct GUTI according to the RAI IE, P-TMSI IE and P-TMSI Signature IE (see the mapping relationship between RAI, P-TMSI, P-TMSI signature and GUTI defined in 3GPP TS23.003[2]), and
- find UE context via this GUTI.

The new MME differentiates the type of the old node as specified in subclause 2.8.2.2.2 of 3GPP TS 23.003. If the old node is an SGSN, the GUTI shall be mapped to RAI and P-TMSI by the new MME; if the old node is a MME, the new MME include GUTI IE and Complete TAU Request Message IE in the Context Request message. The Mapping between temporary and area identities is defined in 3GPP TS 23.003.

If the MM and EPS bearer Contexts for the UE on behalf of which the Context Request message was received include context associated with a LIPA PDN Connection (see 3GPP TS 24.301) then the old MME/SGSN locally deactivates all PDP, MM and EPS bearer contexts associated with the LIPA PDN connection, unless:
- a cell identity is received in the Context Request message and the received identity matches the cell identity stored with the EPS bearer context.
- a CSG identifier is received in the Context Request message and the received CSG identifier matches the CSG identity stored with the EPS bearer context.
- a L-GW (IP) address is received in the Context Request message and the received L-GW (IP) address matches the L-GW (IP) address stored with the EPS bearer context.

Table 7.3.5-1 specifies the presence requirements and conditions of the IEs in the message.

**Table 7.3.5-1: Information Elements in a Context Request**

| **Information elements** | **P** | **Condition / Comment** | **IE Type** | **Ins.** |
|---|---|---|---|---|
| IMSI | C | IMSI shall be included if the UE has been successfully authenticated. | IMSI | 0 |
| GUTI | C | The New MME shall include this IE over S10 interface. | GUTI | 0 |
| Routeing Area Identity(RAI) | C | This IE shall be included over S3/S16 interface, if the GUTI indicates the old node is an SGSN, the new MME maps this IE from GUTI. | ULI for RAI | 0 |
| Packet TMSI(P-TMSI) | C | This IE shall be included over S3/S16 interface. For the S3 interface, if sent by the MME, this IE is derived by the MME from the GUTI received from the UE. | P-TMSI | 0 |
| P-TMSI Signature | C | This IE shall be included over S3/S16 interface if it is received from the. | P-TMSI Signature | 0 |
| Complete TAU request message | C | The new MME shall include this IE, and the old MME may use this IE for integrity check. | Complete Request Message | 0 |
| | | | | |
| | | | | |
| RAT Type | C | The RAT Type indicates the Radio Access Technology which is used in the new system. | RAT Type | 0 |
| Indication | O | This IE shall be included if any one of the applicable flags is set to 1. | Indication | 0 |
| | | Applicable Flags are: | | |
| | | - The MS Validated indicates that the new system has successfully authenticated the UE, or the new system has validated the integrity protection of the TAU request message. | | |
| | | | | |
| | | | | |
| cell identity | C | The cell identity is included in the S1 Application Protocol (see 3GPP TS 36.413 [y]) for the transaction containing the Complete TAU request message. | Cell Identity | 0 |
| CSG identifier | C | The CSG identifier is included in the S1 Application Protocol (see 3GPP TS 36.413 [y]) for the transaction containing the Complete TAU request message. | CSG Identifier | 0 |
| L-GW (IP) address | C | The L-GW (IP) address is included in the S1 Application Protocol (see 3GPP TS 36.413 [y]) for the transaction containing the Complete TAU request message. | IP address | 0 |

### 7.3.6 Context Response

A Context Response message shall be sent as a response to a previous Context Request message during TAU/RAU procedure.

Possible Cause values are specified in Table 8.4-1 in 3GPP TS 29.274. Message specific cause values are:
- "IMSI not known"
- "P-TMSI Signature mismatch"
- "User authentication failed"

If the Context Response message received included no MME/SGSN UE EPS PDN Connections, then the new MME shall send the TRACKING AREA UPDATE REJECT message including the EMM cause value #10 "Implicitly detached" to the UE for which the TRACKING AREA UPDATE REQUEST message as a part of the TAU/RAU procedure was received.

Table 7.3.6-1 specifies the presence requirements and conditions of the IEs in the message.

**Table 7.3.6-1: Information Elements in a Context Response**

| **Information elements** | **P** | **Condition / Comment** | **IE Type** | **Ins.** |
|---|---|---|---|---|
| Cause | M | | Cause | 0 |
| | | | | |
| MME/SGSN UE MM Context | C | This IE shall be included if the Cause IE has the value " Request Accepted ". | MM Context | 0 |
| MME/SGSN UE EPS PDN Connections | C | This IE shall be included if there is at least a PDN connection for this UE on the sending MME/SGSN. Several IEs with this type and instance values shall be included as necessary to represent a list of PDN Connections. | PDN Connection | 0 |
| Sender F-TEID for Control Plane | C | This IE specifies the address and the TEID for control plane message which is chosen by the old MME/SGSN. | F-TEID | 0 |
| SGW S11/S4 IP Address and TEID for Control Plane | C | This IE shall be included if a SGW is being used by the old MME/SGSN. | F-TEID | 1 |
| SGW node name | C | This IE shall be included if the source MME or SGSN has the source SGW FQDN. This IE identifies the SGW that was used by the old MME/SGSN. | FQDN | 0 |
| Indication Flags | C | This IE shall be included if any of the flags are set to 1. | Indication | 0 |
| | | CSG Change Reporting support indication flag: | | |
| | | - This flag shall be set to 1 if the Source S4-SGSN/MME supports CSG Information Change Reporting mechanism. See NOTE1. | | |
| | | | | |
| HRPD access node S101 IP address | C | This IE shall be included only if the HRPD pre registration was performed at the old MME | IP-Address | 0 |
| 1xIWS S102 IP address | C | This IE shall be included only if the 1xRTT CS fallback pre registration was performed at the old MME | IP-Address | 1 |
| | | | | |
| | | | | |

**Table 7.3.6-2: MME/SGSN UE EPS PDN Connections within Context Response**

| Octet 1 | PDN Connection IE Type = 109 (decimal) | | | |
|---|---|---|---|---|
| Octets 2 and 3 | Length = n | | | |
| Octet 4 | Spare and Insiance fields | | | |
| **Information elements** | **P** | **Condition / Comment** | **IE Type** | **Ins.** |
| APN | M | | APN | 0 |
| | | | | |
| | | | | |
| IPv4 Address | C | This IE shall not be included if no IPv4 Address is assigned. See NOTE 1. | IP Address | 0 |
| IPv6 Address | C | This IE shall not be included if no IPv6 Address is assigned. | IP Address | 1 |
| Linked EPS Bearer ID | M | This IE identifies the default bearer of the PDN Connection. | EBI | 0 |
| PGW S5/S8 IP Address for Control Plane or PMIP | M | This IE shall include the TEID in the GTP based S5/S8 case and the GRE key in the PMIP based S5/S8 case. | F-TEID | 0 |
| PGW node name | C | This IE shall be included if the source MME or SGSN has the PGW FQDN. | FQDN | 0 |
| Bearer Contexts | M | Several IEs with this type and instance values may be included as necessary to represent a list of Bearers. | Bearer Context | 0 |
| | | | | |
| | | | | |
| | | | | |
| CSG Information Reporting Action | CO | This IE shall be included whenever available at the source MME/SGSN. | CSG Information Reporting Action | 0 |
| cell identity | C | The cell identity received by the MME when it authorized the APN in the PDN CONNECTIVITY REQUEST message was authorized to use LIPA (see 3GPP TS 23.008 [z]). | Cell Identity | 0 |
| CSG identifier | C | The CSG identifier received by the MME when it authorized the APN in the PDN CONNECTIVITY REQUEST message was authorized to use LIPA (see 3GPP TS 23.008 [z]). | CSG identifier | 0 |
| L-GW (IP) address | C | The L-GW (IP) address received by the MME when it authorized the APN in the PDN CONNECTIVITY REQUEST message was authorized to use LIPA (see 3GPP TS 23.008 [z]). | IP Address | 0 |
| Indication flags | CO | This IE shall be included if any one of the applicable flags is set to 1. | Indication | 0 |
| | | Applicable flags: | | |
| | | - LIPA/SIPTO default bearer only Indication: This flag shall be set to 1 if dedicated bearers are not allowed. | | |

The Bearer Context shall be coded as depicted in Table 7.3.6-3 in 3GPP TS 29.274.

### 7.3.7 Context Acknowledge

A Context Acknowledge message shall be sent as a response to a previous Context Response message, only if the previous Context Response message is received with the acceptance cause.

Possible cause values are specified in Table 8.4-1 in 3GPP TS 29.274. Message specific cause values are:
- "User authentication failed".

Table 7.3.7-1 in 3GPP TS 29.274 specifies the presence requirements and conditions of the IEs in the message.

In an additional embodiment, the scheme described above can be performed in the context of 3GPP LTE TS 29.274, section 7.3.5, which is related to Context Request. The sections 7.3.6 and 7.3.7 related to Context Response, and Context Acknowledge, as well as some tables, are not reproduced in this embodiment and can appreciated in the previous embodiment. Changed portions of the specification of 3GPP LTE TS 29.274, section 7.3.5 are set forth below.

### 7.3.5 Context Request

The new MME/SGSN shall send the Context Request message to the old MME/SGSN on S3/S16/S10 interface as a part of TAU/RAU procedure to get the MM and EPS bearer Contexts for the UE.

The new MME differentiates the type of the old node as specified in subclause 2.8.2.2.2 of 3GPP TS 23.003. If the old node is an SGSN, the GUTI shall be mapped to RAI and P-TMSI by the new MME; if the old node is a MME, the new MME include GUTI IE and Complete TAU Request Message IE in the Context Request message. The Mapping between temporary and area identities is defined in 3GPP TS 23.003.

If the type of sending/new node is the same as the type of the old node, the node shall include in the Context Request message:
- a cell identity, if a cell identity is received with the TRACKING AREA UPDATE REQUEST message as a part of the TAU/RAU procedure, and the MME is configured to support LIPA.
- a L-GW (IP) address, if a L-GW (IP) address is received with the TRACKING AREA UPDATE REQUEST message as a part of the TAU/RAU procedure, and the MME is configured to support LIPA.
- a CSG identifier, if a CSG identifier is received with the TRACKING AREA UPDATE REQUEST message as a part of the TAU/RAU procedure, and the MME is configured to support LIPA.

If the MM and EPS bearer Contexts for the UE on behalf of which the Context Request message was received include context associated with a LIPA PDN Connection (see 3GPP TS 24.301) then the old MME/SGSN locally deactivates all PDP, MM and EPS bearer contexts associated with the LIPA PDN connection, unless:
- a cell identity is received in the Context Request message and the received identity matches the cell identity stored with the EPS bearer context.
- a CSG identifier is received in the Context Request message and the received CSG identifier matches the CSG identity stored with the EPS bearer context.
- a L-GW (IP) address is received in the Context Request message and the received L-GW (IP) address matches the L-GW (IP) address stored with the EPS bearer context.

Table 7.3.5-1 specifies the presence requirements and conditions of the IEs in the message.

In a further additional embodiment, the scheme described above can be performed in the context of 3GPP LTE TS 29.274, section 7.3.5, which is related to Context Request. The sections 7.3.6 and 7.3.7 related to Context Response, and Context Acknowledge, as well as some tables, are not reproduced in this embodiment and can appreciated in the previous embodiment. Changed portions of the specification of 3GPP LTE TS 29.274, section 7.3.5 are set forth below.

### 7.3.5 Context Request

The new MME/SGSN shall send the Context Request message to the old MME/SGSN on S3/S16/S10 interface as a part of TAU/RAU procedure to get the MM and EPS bearer Contexts for the UE.

The new MME differentiates the type of the old node as specified in subclause 2.8.2.2.2 of 3GPP TS 23.003. If the old node is an SGSN, the GUTI shall be mapped to RAI and P-TMSI by the new MME; if the old node is a MME, the new MME include GUTI IE and Complete TAU Request Message IE in the Context Request message. The Mapping between temporary and area identities is defined in 3GPP TS 23.003.

The sending/new node shall include in the Context Request message:
- a cell identity, if a cell identity is received with the TRACKING AREA UPDATE REQUEST message as a part of the TAU/RAU procedure, and the MME is configured to support LIPA.
- a L-GW (IP) address, if a L-GW (IP) address is received with the TRACKING AREA UPDATE REQUEST message as a part of the TAU/RAU procedure, and the MME is configured to support LIPA.
- a CSG identifier, if a CSG identifier is received with the TRACKING AREA UPDATE REQUEST message as a part of the TAU/RAU procedure, and the MME is configured to support LIPA.

If the MM and EPS bearer Contexts for the UE on behalf of which the Context Request message was received include context associated with a LIPA PDN Connection (see 3GPP TS 24.301) then the old MME/SGSN locally deactivates all PDP, MM and EPS bearer contexts associated with the LIPA PDN connection, unless:
- a cell identity is received in the Context Request message and the received identity matches the cell identity stored with the EPS bearer context.
- a CSG identifier is received in the Context Request message and the received CSG identifier matches the CSG identity stored with the EPS bearer context.
- a L-GW (IP) address is received in the Context Request message and the received L-GW (IP) address matches the L-GW (IP) address stored with the EPS bearer context.

Table 7.3.5-1 specifies the presence requirements and conditions of the IEs in the message.

It should be noted that the changes proposed to 3GPP LTE TS 29.274, section 7.3.5, and other sections, can be combined.

### Embodiment B

In other embodiments, the new MME, MME-2, can make a decision whether the LIPA PDN connection needs to be released for the UE. In order for the new MME to do this, the old MME, MME-1, provides in the Context Response message predetermined information, such as cell ID, L-GW IP address, CSG, and an indication if a PDN connection is a LIPA PDN Connection or is a PDN Connection according to another connectivity type or not (i.e., a regular PDN connection as supported in legacy or 3GPP Release 9 or less compliant networks). Upon comparing the predetermined information with the information received as part of the NAS request message (e.g., TAU), the MME can decide to locally deactivate LIPA PDN connection or even return a NAS response message indicating to the UE that the UE needs to implicitly detach.

In this setting, a regular PDN connection can be defined as "The association between a UE represented by one IPv4 address and/or one IPv6 prefix and a PDN represented by an APN."

This embodiment can let the new MME make a decision whether LIPA service continuity is provided at the cell the UE is accessing as long as the new MME is capable of handling LIPA whereas the old MME makes the decision in Embodiment A.

The old MME determines if the new MME is aware of LIPA. The address of the new MME is obtained from F-TEID for the control plane. The old MME should be able to find out the software version of the new MME by retrieving the operator's configuration information with the address of new MME. If old MME determines that the new MME is not aware of LIPA and if the old MME detects that LIPA is active for a PDN connection, the old MME shall release the LIPA PDN connection by triggering the MME requested PDN disconnection procedure. The old MME shall not include LIPA bearer context(s) in the Context Response message if LIPA was released. If the UE has no other PDN connection after LIPA PDN release then the old MME shall initiate MME-initiated Detach Procedure. If the new MME is capable of handling LIPA, the old MME shall not release LIPA PDN connections and send a Context Response message to the new MME. The Context Response message includes the last known Cell ID and the last known CSG ID. Also, for each active PDN connection for the UE, there is a flag that indicates if the PDN connection is LIPA.

The new MME shall release the LIPA PDN connection by triggering the MME requested PDN disconnection procedure if the new MME is aware of LIPA and if the new MME detects that LIPA is active for a PDN connection of the UE based on the LIPA indicator in MME/SGSN UE EPS PDN Connections IE of the Context Response message, and if new MME determines that the LIPA service continuity is not provided at the cell the UE is accessing based on the comparison of Cell ID and CSG ID from Context Response and the Cell ID and CSG ID acquired from the eNB that the UE is accessing. If the UE has no other PDN connection after LIPA PDN release then the old MME shall initiate MME-initiated Detach Procedure.

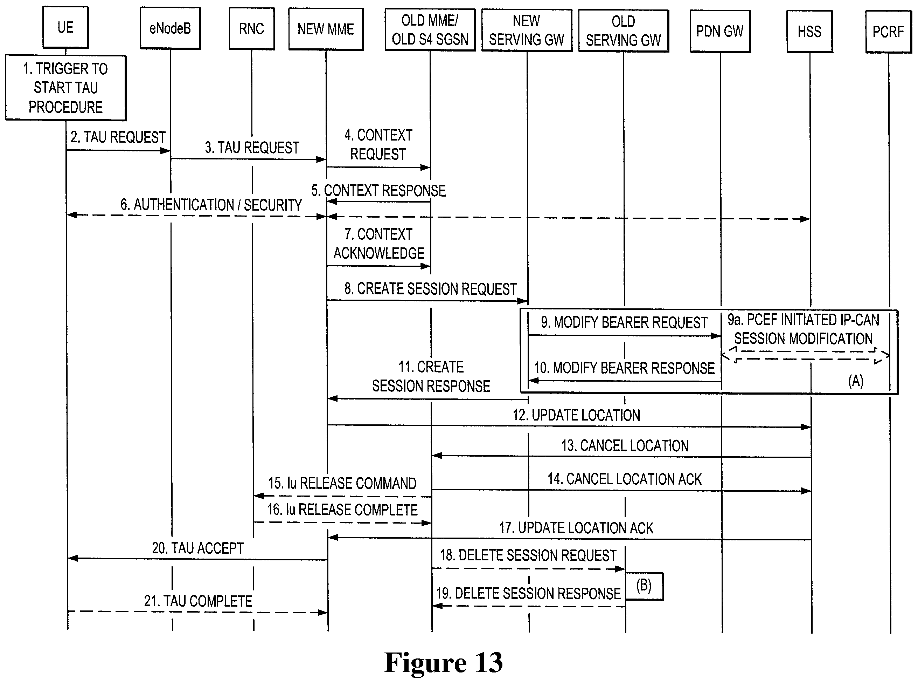

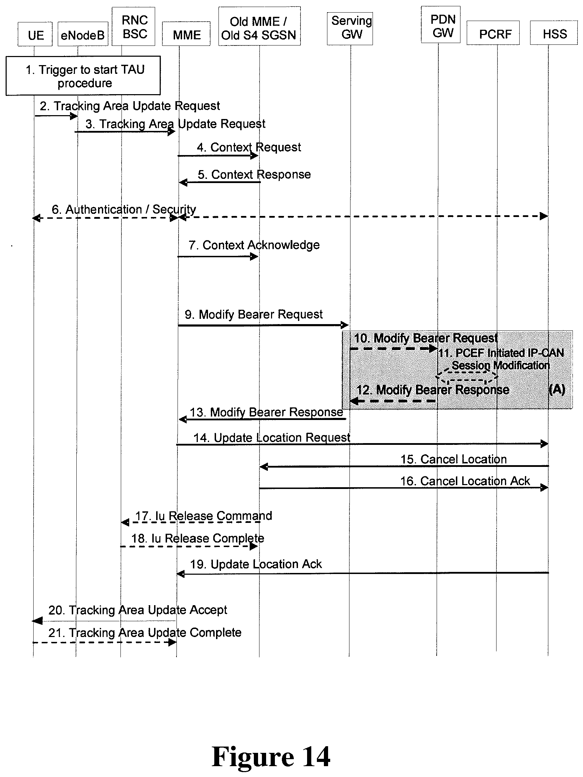

To illustrate foregoing embodiments, reference is now made to Figures 13 and 14 which illustrate a signal flow diagram illustrating a Tracking Area Update procedure with Serving GW change (Figure 13) and an E-UTRAN Tracking Area Update without S GW change (Figure 14).

Referring first to Figure 13, a Tracking Area Update procedure with Serving GW change according to one embodiment will be described below. For a PMIP-based S5/S8, procedure steps (A) and (B) are defined in 3GPP TS 23.402. Steps 9 and 10 concern GTP based S5/S8. In case of Tracking Area Update without MME change the signalling in steps 4, 5, 7 and steps 12-17 are skipped. Figure 13 includes arrows with numbers denoted to indicate steps of the procedure, which will be described in detail below.

At Step 1, one of the triggers described in 3GPP TS 23.401 clause 5.3.3.0 for starting the TAU procedure occurs. The triggers include the "the RRC connection was released with release cause "load re-balancing TAU required"" trigger.

At Step 2, the UE initiates the TAU procedure by sending, to the eNodeB, a TAU Request message together with RRC parameters. An exception is that, if the TAU was triggered for load re-balancing purposes, the old GUMMEI is not included in the RRC parameters.

If the UE's TIN indicates "GUTI" or "RAT-related TMSI" and the UE holds a valid GUTI then the old GUTI indicates this valid GUTI. If the UE's TIN indicates "P-TMSI" and the UE holds a valid P-TMSI and related RAI then these two elements are indicated as the old GUTI. Mapping a P-TMSI and RAI to a GUTI is specified in Annex H. When the UE is in connected mode (e.g. in URA_PCH) when it reselects to E-UTRAN, the UE shall set its TIN to "P-TMSI".

If the UE holds a valid GUTI and the old GUTI indicates a GUTI mapped from a P-TMSI and RAI, then the UE indicates the GUTI as additional GUTI. If the old GUTI indicates a GUTI mapped from a P-TMSI and RAI, and the UE has a valid P-TMSI signature, the P-TMSI signature shall be included.

The additional GUTI in the Tracking Area Update Request message allows the new MME to find any already existing UE context stored in the new MME when the old GUTI indicates a value mapped from a P-TMSI and RAI.

The RRC parameter "old GUMMEI" takes its value from the identifier that is signalled as the old GUTI according to the rules above. For a combined MME/SGSN the eNB is configured to route the MME-code(s) of this combined node to the same combined node. This eNB is also configured to route MME-code(s) of GUTIs that are generated by the UE's mapping of the P-TMSIs allocated by the combined node. Such an eNB configuration may also be used for separate nodes to avoid changing nodes in the pool caused by inter RAT mobility.

At Step 3, the eNodeB derives the MME from the RRC parameters carrying the old GUMMEI and the indicated Selected Network. If that MME is not associated with that eNodeB or the GUMMEI is not available or the UE indicates that the TAU procedure was triggered by load re-balancing, the eNodeB selects an MME as described in 3GPP TS 23.401, clause 4.3.8.3 on "MME Selection Function".

The eNodeB forwards the TAU Request message together with additional parameter such as the CSG access mode, CSG ID, TAI+ECGI of the cell from where it received the message and with the Selected Network to the new MME. CSG ID is provided by RAN if the UE sends the TAU Request message via a CSG cell or a hybrid cell. CSG access mode is provided if the UE sends the TAU Request message via a hybrid cell. If the CSG access mode is not provided but the CSG ID is provided, the MME shall consider the cell as a CSG cell.

At Step 4, the new MME uses the GUTI received from the UE to derive the old MME/S4 SGSN address, and sends a Context Request (old GUTI, complete TAU Request message, P-TMSI Signature, MME Address, UE validated) message to the old MME/old S4 SGSN to retrieve user information. UE Validated indicates that the new MME has validated the integrity protection of the TAU message, e.g. based on native EPS security context for the UE. To validate the Context Request the old MME uses the complete TAU Request message and the old S4 SGSN uses the P-TMSI Signature and responds with an appropriate error if integrity check fails in old MME/S4 SGSN. This shall initiate the security functions in the new MME. If the security functions authenticate the UE correctly, the new MME shall send a Context Request (IMSI, complete TAU Request message, MME Address, UE Validated) message to the old MME/S4 SGSN with the UE Validated set. If the new MME indicates that it has authenticated the UE or if the old MME/old S4 SGSN correctly validates the UE, then the old MME/old S4 SGSN starts a timer.

At Step 5, if the Context Request is sent to an old MME the old MME responds with a Context Response (IMSI, ME Identity (if available), MSISDN, MM Context, EPS Bearer Context(s), Serving GW signalling Address and TEID(s), ISR Supported, MS Info Change Reporting Action (if available), CSG Information Reporting Action (if available), UE Core Network Capability, UE Specific DRX Parameters) message. If the Context Request is sent to an old S4 SGSN the old S4 SGSN responds with a Context Response (MM Context, EPS Bearer Context(s), Serving GW signalling Address and TEID(s), ISR Supported, MS Info Change Reporting Action (if available), CSG Information Reporting Action (if available), UE Core Network Capability, UE Specific DRX Parameters). The MM Context contains security related information as well as other parameters (including IMSI, ME Identity (if available) and MSISDN) as described in 3GPP TS 23.401 clause 5.7.2 Information Storage for MME). The unused Authentication Quintets in the MM Context are also maintained in the SGSN. The PDN GW Address and TEID(s) (for GTP-based S5/S8) or GRE Keys (PMIP-based S5/S8 at the PDN GW(s) for uplink traffic) and the TI(s), is part of the EPS Bearer Context. If the UE is not known in the old MME/old S4 SGSN or if the integrity check for the TAU Request message fails, the old MME/old S4 SGSN responds with an appropriate error cause. ISR Supported is indicated if the old MME/old S4 SGSN and associated Serving GW are capable to activate ISR for the UE. The MSISDN is included if the old MME/old S4 SGSN has it stored for that UE.

At Step 7, the MME (if the MME has changed then it is the new MME) determines to relocate the Serving GW. The Serving GW is relocated when the old Serving GW cannot continue to serve the UE. The MME (if the MME has changed then it is the new MME) may also decide to relocate the Serving GW if a new Serving GW is expected to serve the UE longer and/or with a more optimal UE to PDN GW path, or if a new Serving GW can be co-located with the PDN GW. Selection of a new Serving GW is performed according to 3GPP TS 23.401 clause 4.3.8.2 on "Serving GW selection function".

If the MME has changed the new MME sends a Context Acknowledge (Serving GW change indication) message to the old MME/old S4 SGSN.

At Step 8, if the MME has changed the new MME verifies the EPS bearer status received from the UE with the bearer contexts received from the old MME/old S4 SGSN. The MME releases any network resources related to EPS bearers that are not active in the UE. If there is no bearer context at all, the MME rejects the TAU Request.

It should be noted that the User CSG Information IE is only sent in step 8 if the "Active flag" is set in the TAU Request message.

At Step 12, the new MME verifies whether it holds subscription data for the UE identified by the GUTI, the additional GUTI or by the IMSI received with the context data from the old CN node.

At Step 13, the HSS sends the message Cancel Location (IMSI, Cancellation Type) to the old MME with Cancellation Type set to Update Procedure.

At Step 14, if the timer started in step 4 is not running, the old MME removes the MM context. Otherwise, the contexts are removed when the timer expires. It also ensures that the MM context is kept in the old MME for the case the UE initiates another TAU procedure before completing the ongoing TAU procedure to the new MME. The old MME acknowledges with the message Cancel Location Ack (IMSI).

At Step 15, when old S4 SGSN receives the Context Acknowledge message and if the UE is in Iu Connected, the old S4 SGSN sends an Iu Release Command message to the RNC after the timer started in step 4 has expired.

At Step 16, the RNC responds with an Iu Release Complete message.

At Step 17, the HSS acknowledges the Update Location Request message by sending an Update Location Ack (IMSI, Subscription Data) message to the new MME. If the Update Location is rejected by the HSS, the new MME rejects the TAU Request from the UE with an appropriate cause. The Subscription Data may contain the CSG subscription data for the PLMN.

If the UE initiates the TAU procedure at a CSG cell, the new MME shall check whether the CSG ID is contained in the CSG subscription and is not expired. If the CSG ID is not present or expired, the MME shall send a Tracking Area Update reject message to the UE with an appropriate cause value. The UE shall remove the CSG ID from its Allowed CSG list if present. If the UE has ongoing emergency bearer services no CSG access control shall be performed. If all checks are successful then the new MME constructs a context for the UE.

At Step 18, if the MME has changed, when the timer started in step 4 expires the old MME/old S4 SGSN releases any local MME or SGSN bearer resources and if it received the Serving GW change indication in the Context Acknowledge message, the old MME/old S4 SGSN deletes the EPS bearer resources by sending Delete Session Request (Cause) messages to the old Serving GW. Cause indicates to the old Serving GW that the old Serving GW shall not initiate a delete procedure towards the PDN GW.

The MME sends a TAU Accept message to the UE. If the active flag is set the MME may provide the eNodeB with Handover Restriction List. GUTI is included if the MME allocates a new GUTI. If the "active flag" is set in the TAU Request message the user plane setup procedure can be activated in conjunction with the TAU Accept message. The procedure is described in detail in 3GPP TS 36.300. The message sequence should be the same as for the UE triggered Service Request procedure specified in clause 5.3.4.1 of 3GPP TS 23.401 from the step when MME establishes the bearer(s). The MME indicates the EPS bearer status IE to the UE. The UE removes any internal resources related to bearers that are not marked active in the received EPS bearer status. Handover Restriction List is described in clause 4.3.5.7 of 3GPP TS 23.401 "Mobility Restrictions". The MME sets the IMS Voice over PS session supported as described in clause 4.3.5.8 of 3GPP TS 23.401.

If the TAU procedure is initiated by manual CSG selection and occurs via a CSG cell, the UE upon receiving the TAU Accept message shall add the CSG ID to its Allowed CSG list if it is not already present. Manual CSG selection is not supported if the UE has emergency bearers established.

If the user plane setup is performed in conjunction with the TAU Accept message and the TAU is performed via a hybrid cell, then the MME shall send an indication whether the UE is a CSG member to the RAN along with the S1-MME control message. Based on this information the RAN may perform differentiated treatment for CSG and non-CSG members.

Note that if the UE receives a TAU Accept message via a hybrid cell, the UE does not add the corresponding CSG ID to its Allowed CSG list. Adding a CSG ID to the UE's local Allowed CSG list for a hybrid cell is performed only by OTA or OMA DM procedures.

At Step 21, if GUTI was included in the TAU Accept, the UE acknowledges the received message by returning a TAU Complete message to the MME.

When the "Active flag" is not set in the TAU Request message and the Tracking Area Update was not initiated in ECM-CONNECTED state, the new MME releases the signalling connection with UE, according to 3GPP TS 23.401 clause 5.3.5. Note that the new MME may initiate E-RAB establishment (see 3GPP TS 36.413) after execution of the security functions, or wait until completion of the TA update procedure. For the UE, E-RAB establishment may occur anytime after the TA update request is sent.

Referring now to Figure 14, a method of updating E-UTRAN Tracking Area without S-GW Change according to another embodiment will be described below. Figure 14 includes arrows with numbers denoted to indicate steps of the method, which will be described in detail below. For a PMIP-based S5/S8, procedure steps (A) are defined in 3GPP TS 23.402 [2]. Steps 12 and 14 concern GTP based S5/S8. In case of Tracking Area Update without MME change the signalling in steps 4, 5, 7 and steps 9-19 are skipped.

At Step 1, one of the triggers described in 3GPP TS 23.401 clause 5.3.3.0 for starting the TAU procedure occurs. The triggers include the "the RRC connection was released with release cause "load re-balancing TAU required"" trigger.

At Step 2, the UE initiates a TAU procedure by sending, to the eNodeB, a Tracking Area Update Request (UE Core Network Capability, active flag, EPS bearer status, old GUTI, last visited TAI, P-TMSI signature, additional GUTI, KSI_{SGSN}, KSI_{ASME}, NAS sequence number, NAS-MAC) message together with RRC parameters indicating the Selected Network and the old GUMMEI. An exception is that, if the TAU was triggered for load re-balancing purposes (see 3GPP TS 23.401, clause 4.3.7.3), the old GUMMEI is not included in the RRC parameters.

If the UE's TIN indicates "GUTI" or "RAT-related TMSI" and the UE holds a valid GUTI then the old GUTI indicates this valid GUTI. If the UE's TIN indicates "P-TMSI" and the UE holds a valid P-TMSI and related RAI then these two elements are indicated as the old GUTI. Mapping a P-TMSI and RAI to a GUTI is specified in Annex H. When the UE is in connected mode (e.g. in URA_PCH) when it reselects to E-UTRAN, the UE shall set its TIN to "P-TMSI".

If the UE holds a valid GUTI and the old GUTI indicates a GUTI mapped from a P-TMSI and RAI, then the UE indicates the GUTI as additional GUTI. If the old GUTI indicates a GUTI mapped from a P-TMSI and RAI, and the UE has a valid P-TMSI signature, the P-TMSI signature shall be included.

The additional GUTI in the Tracking Area Update Request message allows the new MME to find any already existing UE context stored in the new MME when the old GUTI indicates a value mapped from a P-TMSI and RAI.

The RRC parameter "old GUMMEI" takes its value from the identifier that is signalled as the old GUTI according to the rules above. For a combined MME/SGSN the eNB is configured to route the MME-code(s) of this combined node to the same combined node. This eNB is also configured to route MME-code(s) of GUTIs that are generated the UE's mapping of the P-TMSIs allocated by the combined node. Such an eNB configuration may also be used for separate nodes to avoid changing nodes in the pool caused by inter RAT mobility.

The last visited TAI shall be included in order to help the MME produce a good list of TAIs for any subsequent TAU Accept message. Selected Network indicates the network that is selected. Active flag is a request by the UE to activate the radio and S1 bearers for all the active EPS Bearers by the TAU procedure. The UE's ISR capability is included in the UE Core Network Capability element. The EPS bearer status indicates each EPS bearer that is active in the UE. The TAU Request message shall be integrity protected by the NAS-MAC as described in 3GPP TS 33.401 [41]. KSI_{ASME} is included if the UE has valid security parameters. NAS sequence number indicates the sequential number of the NAS message. KSI_{SGSN} is included if the UE indicates a GUTI mapped from a P-TMSI in the information element "old GUTI".

At Step 3, the eNodeB derives the MME from the RRC parameters carrying the old GUMMEI and the indicated Selected Network. If that GUMMEI is not associated with the eNodeB, or the GUMMEI is not available or the UE indicates that the TAU procedure was triggered by load re-balancing, the eNodeB selects the MME as described in 3GPP TS 23.401, clause 4.3.8.3 on "MME Selection Function". The eNodeB forwards the TAU Request message together with the CSG access mode, CSG ID, TAI+ECGI of the cell from where it received the message and with the Selected Network to the MME. CSG ID is provided by RAN if the UE sends the TAU Request message via a CSG cell or a hybrid cell. CSG access mode is provided if the UE sends the TAU Request message via a hybrid cell. If the CSG access mode is not provided but the CSG ID is provided, the MME shall consider the cell as a CSG cell.

At Step 4, the new MME uses the GUTI received from the UE to derive the old MME/S4 SGSN address and sends a Context Request (old GUTI, MME Address, UE Validated, complete TAU Request message, P-TMSI Signature) message to the old MME/S4 SGSN to retrieve the user information. UE Validated indicates that the new MME has validated the integrity protection of the TAU message, e.g. based on native EPS security context for the UE. To validate the Context Request the old MME uses the complete TAU Request message and the old S4 SGSN uses the P-TMSI Signature and responds with an appropriate error if integrity check fails in old MME/S4 SGSN. This shall initiate the security functions in the new MME. If the security functions authenticate the UE correctly, the new MME shall send a Context Request (IMSI, complete TAU Request message, MME Address, UE Validated) message to the old MME/S4 SGSN with the UE Validated set. If the new MME indicates that it has authenticated the UE or if the old MME/old S4 SGSN authenticates the UE, the old MME/old S4 SGSN starts a timer.

If the UE with emergency bearers is not authenticated in the old MME/old S4 SGSN (in a network supporting unauthenticated UEs) the old MME/old S4 SGSN continues the procedure with sending a Context Response and starting the timer also when it cannot validate the Context Request.

At Step 5, if the Context Request is sent to an old MME the old MME responds with a Context Response (IMSI, ME Identity (if available), MSISDN, unused EPS Authentication Vectors, KSIASME, KASME, EPS Bearer Context(s), Serving GW signalling Address and TEID(s), MS Info Change Reporting Action (if available), CSG Information Reporting Action (if available), UE Core Network Capability, UE Specific DRX Parameters) message. If the Context Request is sent to an old S4 SGSN the old S4 SGSN responds with a Context Response (IMSI, ME Identity (if available), MSISDN, unused Authentication Quintets, CK, IK, KSISGSN, EPS Bearer Context(s), Serving GW signalling Address and TEID(s), ISR Supported, MS Info Change Reporting Action (if available), CSG Information Reporting Action (if available), UE Core Network Capability, UE Specific DRX Parameters) message. The Authentication Quintets are copied by SGSN before they are sent. The PDN GW Address and TEID(s) (for GTP-based S5/S8) or GRE Keys (PMIP-based S5/S8 at the PDN GW(s) for uplink traffic and the TI(s), is part of the EPS Bearer Context. ISR Supported is indicated if the old SGSN and associated Serving GW are capable to activate ISR for the UE.

The new MME shall ignore the UE Core Network Capability contained in the Context Response only when it has previously received an UE Core Network Capability in the Tracking Area Update Request. If the UE is not known in the old MME/old S4 SGSN or if the integrity check for the TAU request message fails, the old MME/old S4 SGSN responds with an appropriate error cause.

If the UE receives emergency services from the old MME/old S4 SGSN and the UE is UICCless, IMSI can not be included in the Context Response. For emergency attached UEs, if the IMSI cannot be authenticated, then the IMSI shall be marked as unauthenticated. Also, in this case, security parameters are included only if available.

At Step 6, if the integrity check of TAU Request message (sent in step 2) failed, then authentication is mandatory. The authentication functions are defined in clause 5.3.10 on "Security Function". Ciphering procedures are described in clause 5.3.10 on "Security Function". If GUTI allocation is going to be done and the network supports ciphering, the NAS messages shall be ciphered.

If this TAU request is received for a UE which is already in ECM_CONNECTED state and the PLMN-ID of the TAI sent by the eNB in Step 3 is different from that of the GUTI included in the TAU Request message, the MME shall delay authenticating the UE until after Step 21 (TAU Complete message).

The MME delays the authentication such that the UE first updates its registered PLMN-ID to the new PLMN-ID selected by the RAN during handover. The new PLMN-ID is provided by the MME to the UE as part of the GUTI in the TAU accept message in Step 20. Doing this ensures that the same PLMN-ID is used in the derivation of the Kasme key by both the network and the UE.

If the new MME is configured to allow emergency services for unauthenticated UE the new MME behave as follows:
- where a UE has only emergency bearer services, the MME either skip the authentication and security procedure or accepts that the authentication may fail and continues the Tracking Area Update procedure; or
- where a UE has both emergency and non emergency bearer services and authentication fails, the MME continues the Tracking Area Update procedure and deactivates all the non-emergency PDN connections as specified in clause 5.10.3.

At Step 7, if the old node is an old MME the new MME sends a Context Acknowledge message to the old MME. The old MME marks in its context that the information in the GWs and the HSS are invalid. This ensures that the MME updates the GWs and the HSS if the UE initiates a TAU procedure back to the MME before completing the ongoing TAU procedure.

If the old node is an old S4 SGSN the MME sends a Context Acknowledge (ISR Activated) message to the old SGSN. Unless ISR Activated is indicated by the MME, the old S4 SGSN marks in its context that the information in the GWs is invalid. This ensures that the old S4 SGSN updates the GWs if the UE initiates a RAU procedure back to the old S4 SGSN before completing the ongoing TAU procedure. If ISR Activated is indicated to the old S4 SGSN, this indicates that the old S4 SGSN shall maintain its UE context including authentication quintets and stop the timer started in step 4. In this case, if the Implicit Detach timer is running, the old S4 SGSN shall re-start it with a slightly larger value than the UE's GERAN/UTRAN Deactivate ISR timer. Also, in this case, if the old SGSN has maintained the Serving GW address for user plane and S4 GTP-U TEID, the old SGSN shall remove Serving GW address for user plane and S4 GTP-U TEID locally. When ISR Activated is not indicated and this timer expires the old SGSN deletes all bearer resources of that UE. As the Context Acknowledge from the MME does not include any S-GW change the S4 SGSN does not send any Delete Session Request message to the S-GW. The MME shall not activate ISR if the associated Serving GW does not support ISR.

If the security functions do not authenticate the UE correctly, then the TAU shall be rejected, and the MME shall send a reject indication to the old MME/old S4 SGSN. The old MME/old S4 SGSN shall continue as if the Identification and Context Request was never received.

This embodiment does not have a step corresponding to the Step 8 of Figure 13.

At Step 9, if the MME has changed the new MME adopts the bearer contexts received from the old MME/SGSN as the UE's EPS bearer contexts to be maintained by the new MME. The MME establishes the EPS bearer(s) in the indicated order. The MME deactivates the EPS bearers which cannot be established.

The MME verifies the EPS bearer status received from the UE with the EPS bearer contexts it maintains and releases any network resources related to EPS bearers that are not active in the UE. If there is no bearer context at all, the MME rejects the TAU Request. If the MME has changed the new MME sends a Modify Bearer Request (new MME address and TEID, Serving network identity, ISR Activated, RAT type) message per PDN connection to the Serving GW. The PDN GW address is indicated in the bearer contexts. If indicated, the information ISR Activated indicates that ISR is activated. If the PDN GW requested UE's location and/or User CSG information, the MME also includes the User Location Information IE and/or User CSG Information IE in this message. If the UE Time Zone has changed, the MME includes the UE Time Zone IE in this message. If the old node is an old MME at a Tracking Area Update with a MME change ISR Activated shall not be indicated. The User CSG Information IE is only sent in step 9 if the "Active flag" is set in the TAU Request message.

When the Modify Bearer Request does not indicate ISR Activated the S-GW deletes any ISR resources by sending a Delete Bearer Request to the other CN node that has bearer resources on the S-GW reserved.

At Step 10, if the RAT type has changed, or the Serving GW has received the User Location Information IE or the UE Time Zone IE or User CSG Information IE from the MME in step 9, the Serving GW informs the PDN GW(s) about this information that e.g. can be used for charging, by sending the message Modify Bearer Request (RAT type) per PDN connection to the PDN GW(s) concerned. User Location Information IE and/or UE Time Zone IE and/or User CSG Information IE are also included if they are present in step 9.

At Step 11, if dynamic PCC is deployed, and RAT type information or UE location information needs to be conveyed from the PDN GW to the PCRF, then the PDN GW shall send this information to the PCRF by means of an IP-CAN Session Modification procedure as defined in 3GPP TS 23.203 [6].

The PDN GW does not need to wait for the PCRF response, but continues in the next step. If the PCRF response leads to an EPS bearer modification the PDN GW should initiate a bearer update procedure.

At Step 12, the PDN GW updates its context field to allow DL PDUs to be routed to the correct Serving GW. PDN GW returns a Modify Bearer Response (MSISDN) to the Serving GW. The MSISDN is included if the PDN GW has it stored in its UE context.

At Step 13, the Serving GW updates its bearer context. If ISR Activated is indicated in step 9 and RAT Type received in step 9 indicates E-UTRAN, then the Serving GW only updates the MME Control Plane Address stored locally and keep the SGSN related information unchanged. Also, in this case, if the Serving GW has maintained the SGSN address for user plane and S4 GTP-U TEID, the Serving GW removes the SGSN address for user plane and S4 GTP-U TEID locally. Otherwise the Serving GW shall update all of the information stored locally for this UE with the related information received from the MME. This allows the Serving GW to route Bearer PDUs to the PDN GW when received from eNodeB. The Serving GW returns a Modify Bearer Response (Serving GW address and TEID for uplink traffic) message to the new MME.

At Step 14, the new MME verifies whether it holds subscription data for the UE identified by the GUTI, the additional GUTI or by the IMSI received with the context data from the old CN node. If there are no subscription data in the new MME for this UE then the new MME informs the HSS of the change of MME by sending an Update Location Request (MME Id, IMSI, ULR-Flags, MME Capabilities, Homogenous Support of IMS Over PS Sessions) message to the HSS. ULR-Flags indicates that update location is sent from an MME and the MME registration shall be updated in HSS. The HSS does not cancel any SGSN registration. The MME capabilities indicate the MME's support for regional access restrictions functionality. Homogenous Support of IMS Over PS Sessions indicates whether or not "IMS Voice over PS Sessions" is supported homogeneously in all TAs in the serving MME.

If all the EPS bearers of the UE have emergency ARP value, the new MME may skip the update location procedure or proceed even if the update location fails.

At Step 15, the HSS sends a Cancel Location (IMSI, Cancellation type) message to the old MME with a Cancellation Type set to Update Procedure.

At Step 16, when receiving a Cancel Location message and the timer started in step 4 is not running, the old MME removes the MM and bearer contexts. Otherwise, the contexts are removed when the timer expires. It also ensures that the MM context is kept in the old MME for the case the UE initiates another TAU procedure before completing the ongoing TAU procedure to the new MME. The old MME acknowledges with a Cancel Location Ack (IMSI) message. It is possible that ISR Activated is never indicated from new to old MME. So an old MME deletes all the bearer resources of the UE in any case when the timer started in step 4 expires, which is independent on receiving a Cancel Location message.

At Step 17, when receiving the Context Acknowledge message and if the UE is Iu Connected, the old SGSN sends an Iu Release Command message to the RNC after the timer started in step 4 has expired.

At Step 18, the RNC responds with an Iu Release Complete message.

At Step 19, the HSS acknowledges the Update Location Request by returning an Update Location Ack (IMSI, Subscription Data) message to the new MME after the cancelling of the old MME context is finished. If the Update Location is rejected by the HSS, the MME rejects the TAU Request from the UE with an appropriate cause sent in the TAU Reject message to the UE. If all checks are successful, the MME constructs an MM context for the UE. The Subscription Data may contain the CSG subscription data for the PLMN.

If the UE initiates the TAU procedure at a CSG cell, the new MME shall check whether the CSG ID is contained in the CSG subscription and is not expired. If the CSG ID is not present or expired, the MME shall send a Tracking Area Update reject message to the UE with an appropriate cause value. The UE shall remove the CSG ID from its Allowed CSG list if present.

At Step 20, if due to regional subscription restrictions or access restrictions (e.g. CSG restrictions) the UE is not allowed to access the TA:

-The MME rejects the Tracking Area Update Request with an appropriate cause to the UE.

-For UEs with emergency EPS bearers, i.e. at least one EPS bearer has an ARP value reserved for emergency services, the new MME accepts the Tracking Area Update Request and deactivates all non-emergency PDN connections as specified in clause 5.10.3. If the Tracking Area Update procedure is initiated in ECM-IDLE state, all non-emergency EPS bearers are deactivated by the Tracking Area Update procedure without bearer deactivation signalling between the UE and the MME.

The MME responds to the UE with a Tracking Area Update Accept (GUTI, TAI-list, EPS bearer status, NAS sequence number, NAS-MAC, ISR Activated, IMS Voice over PS session supported, Emergency Service Support indicator, LCS Support Indication) message. If the active flag is set the Handover Restriction List may be sent to eNodeB as eNodeB handles the roaming restrictions and access restrictions in the Intra E-UTRAN case. If the "active flag" is set in the TAU Request message the user plane setup procedure is activated in conjunction with the TAU Accept message. The procedure is described in detail in 3GPP TS 36.300. The message sequence should be the same as for the UE triggered Service Request procedure specified in clause 5.3.4.1 in 3GPP TS 36.300 from the step when MME establish the bearers(s). The EPS bearer status indicates the active bearers in the network. The UE removes any internal resources related to bearers not marked active in the received EPS bearer status. If ISR Activated is indicated to the UE, this indicates that its P-TMSI and RAI shall remain registered with the network and shall remain valid in the UE. At a Tracking Area Update with an MME change ISR Activated shall not be indicated. At a Tracking Area Update without an MME change, if ISR is activated for the UE when the MME receives the Tracking Area Update Request, the MME should maintain ISR by indicating ISR Activated in the Tracking Area Update Accept message. Handover Restriction List is described in clause 4.3.5.7 in 3GPP TS 36.300, "Mobility Restrictions". The MME sets the IMS Voice over PS session supported as described in clause 4.3.5.8 in 3GPP TS 36.300. The Emergency Service Support indicator informs the UE that Emergency bearer services are supported. LCS Support Indication indicates whether the network supports the EPC-MO-LR and/or CS-MO-LR as described in 3GPP TS 23.271.

When receiving the TAU Accept message and there is no ISR Activated indication the UE shall set its TIN to "GUTI". When ISR Activated is indicated and the UE's TIN indicates "GUTI" the UE's TIN shall not be changed. When ISR Activated is indicated and the TIN is "P-TMSI" or "RAT-related TMSI" the UE shall set its TIN to "RAT-related TMSI".

For an MME change ISR is not activated by the new MME to avoid context transfer procedures with two old CN nodes. For an emergency attached UE, emergency ISR is not activated.

If the TAU procedure is initiated by manual CSG selection and occurs via a CSG cell, the UE upon receiving TAU Accept message shall add the CSG ID to its Allowed CSG list if it is not already present. Manual CSG selection is not supported if the UE has emergency bearers established.

If the user plane setup is performed in conjunction with the TAU Accept message and the TAU is performed via a hybrid cell, then the MME shall send an indication whether the UE is a CSG member to the RAN along with the S1-MME control message. Based on this information the RAN may perform differentiated treatment for CSG and non-CSG members.

If the UE receives a TAU Accept message via a hybrid cell, the UE does not add the corresponding CSG ID to its Allowed CSG list. Adding a CSG ID to the UE's local Allowed CSG list for a hybrid cell is performed only by OTA or OMA DM procedures.

At Step 21, if the GUTI was changed the UE acknowledges the new GUTI by returning a Tracking Area Update Complete message to the MME. When the "Active flag" is not set in the TAU Request message and the Tracking Area Update was not initiated in ECM-CONNECTED state, the MME releases the signalling connection with UE, according to clause 5.3.5.

The new MME may initiate E-RAB establishment (see 3GPP TS 36.413) after execution of the security functions, or wait until completion of the TA update procedure. For the UE, E-RAB establishment may occur anytime after the TA update request is sent.

In the case of a rejected tracking area update operation, due to regional subscription, roaming restrictions, or access restrictions (see 3GPP TS 23.221 and 3GPP TS 23.008) the new MME should not construct an MM context for the UE. In the case of receiving the subscriber data from HSS, the new MME may construct an MM context and store the subscriber data for the UE to optimize signalling between the MME and the HSS. A reject shall be returned to the UE with an appropriate cause and the S1 connection shall be released. Upon return to idle, the UE shall act according to 3GPP TS 23.122.

If the new MME is unable to update the bearer context in one or more P-GWs, the new MME shall deactivate the corresponding bearer contexts as described in clause "MME Initiated Dedicated Bearer Deactivation Procedure". This shall not cause the MME to reject the tracking area update.

The new MME shall determine the Maximum APN restriction based on the received APN Restriction of each bearer context in the Context Response message and then store the new Maximum APN restriction value.

The bearer contexts shall be prioritized by the new MME. If the new MME is unable to support the same number of active bearer contexts as received from old MME/SGSN, the prioritisation is used to decide which bearer contexts to maintain active and which ones to delete. In any case, the new MME shall first update all contexts in one or more P-GWs and then deactivate the context(s) that it cannot maintain as described in clause "MME Initiated Dedicated Bearer Deactivation Procedure". This shall not cause the MME to reject the tracking area update.

The new MME shall not deactivate emergency service related EPS bearers, i.e. EPS bearers with ARP values reserved for emergency services. If MS (UE) was in PMM-CONNECTED state the bearer contexts are sent already in the Forward Relocation Request message as described in clause "Serving RNS relocation procedures" of 3GPP TS 23.060 [7].

If the tracking area update procedure fails a maximum allowable number of times, or if the MME returns a Tracking Area Update Reject (Cause) message, the UE shall enter EMM DEREGISTERED state. If the Update Location Ack message indicates a reject, this should be indicated to the UE, and the UE shall not access non-PS services until a successful location update is performed. See 3GPP TS 23.401 clause 5.3.3.1 and 5.3.3.2 for the related context.

### Embodiment C

Another embodiment, Embodiment C, can be used to solve the Problem 2. In this embodiment, the MME is configured to reject a BEARER RESOURCE ALLOCATION REQUEST if the requested bearer resource belongs to LIPA PDN connection based on Linked EPS bearer identity IE in the message. Furthermore, when passing the contexts to another MME or SGSN, the target MME is expected to behave in accordance with the limitations imposed by MME-1 or the old MME or the source MME. I.e. a user would be confused if a BEARER RESOURCE ALLOCATION REQUEST if the requested bearer resource belongs to LIPA PDN connection based on Linked EPS bearer identity IE in the message, is suddenly not rejected. The embodiment therefore needs to be able to determine the limitations imposed by the MME-1.

To prevent confusion, the MME may be configured to set the ESM cause value appropriately in order to prevent the UE from retry. One example ESM cause value would be #32: "service option not supported" or #33: "requested service option not subscribed".

In operation, the Context Request message received by a source MME/SGSN from a target MME/SGSN shall include a first identifier (for example cell identifier or other discussed in this document [e.g. excluding the CSG id or L-GW address]) indicating the LIPA PDN Connections can be received. In addition, the source can determine using the first identifier that the target supports 3GPP Rel-10 LIPA restrictions, e.g. the 3GPP Rel-10 LIPA restrictions including that only default bearers for LIPA PDN connections are permitted. On the other hand, if the Context Request message received by a source MME/SGSN from a target MME/SGSN includes at least a second identifier [e.g. excluding the CSG id or L-GW address], then the source can determine using the second identifier that the target supports another set of restrictions, e.g. the other set of restrictions excluding that only default bearers for LIPA PDN connections are permitted.

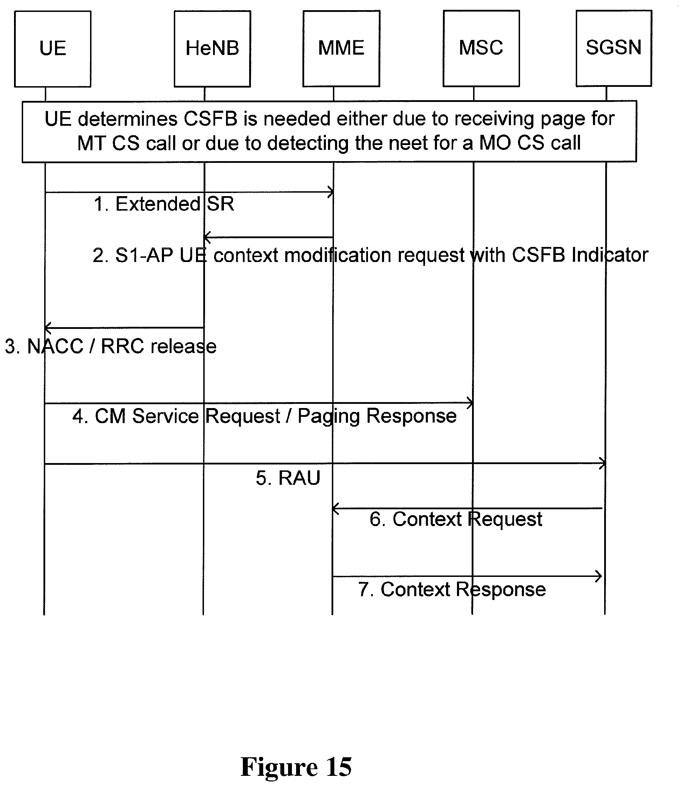

Referring now to Figure 15, there is shown a signal flow diagram illustrating the exchange of messages between functional elements for determining THE CONNECTION CONTEXT FOR CONNECTIONS where a UE performs CS fall back (CSFB). As depicted, CS fall back is performed when the UE either initiates an (emergency) voice CS call or receives/terminates a CS voice call, while the UE is attached to a system that doesn't have a CS domain. An example of such a system is the EPC or EPS. An example of a system with a voice domain supporting voice calls (both originating and terminating is the GPRS system). Since in some embodiments connectivity to local networks or connectivity to SIPTO-H(eNB) is to be disconnected upon moving between systems, upon moving away from the H(e)NB where the connectivity was established, or upon leaving an area served by a set of H(e)NBs sharing a CSG ID, it can be seen that the connectivity also needs to be disconnected when moving between systems, e.g. a EPS or EPC system and a GPR or CS domain supporting system.

It is assumed the UE is combined registered. This means there is registration context for the UE (based on the subscription of the user) in the MSC and MME. It is also assumed the UE has one or more LIPA PDN connections. The UE detects the need for CSFB. Upon detecting the need for CSFB the UE sends an extended service request to the MME (flow/step 1). The extended service request includes an indication that the request if (emergency) CSFB (MO [mobile originated] or MT [mobile terminated]).

At flow/step 2, the MME responds by informing the HeNB (S1-AP UE context modification request with CSFB Indicator). The HeNB initiates flow/step 3 (I-RAT cell change order to GERAN, optionally with NACC, or RRC connection release). The UE then connects to the MSC (flow/step 4) either by CM Service Request in case of MO or by Paging Response in case of MT. Flow/step 5 can happen either before or after the CS call. For example, flow/step 5 can happen after the CS call if the access network is GERAN and if the access network is GERAN and DTM (Dual Transmission Mode) is not supported. Otherwise, flow/step 5 can happen during or even prior to the CS call.

The SGSN, upon receiving a RAU as part of flow/step 5, determines that a request for contexts needs to be sent to the MME. The MME responds to the request for contexts.

As described herein, either the MME includes context related to the LIPA PDN connections in the response to the request for contexts or the MME omits (and locally deactivates) these contexts. A condition could be that the MME omits the contexts related to the LIPA PDN connections and locally deactivates these contexts if sender of the context request message is a type other than MME (e.g. the sender is of the SGSN type or the sender is a SGSN). However, it will be appreciated that other conditions, such as described herein, may apply. Alternatively, if MME includes the contexts, the SGSN may locally deactivate the contexts based on conditions.

The approach described here is preferred over an approach where the MME after flow/step 1 locally deactivate the contexts based on conditions. The MME shall not deactivate LIPA before UE moves into 2G/3G if the UE has only LIPA PDN connection. The reason is that as soon as the MME deactivates the LIPA PDN connection, the UE will be detached.

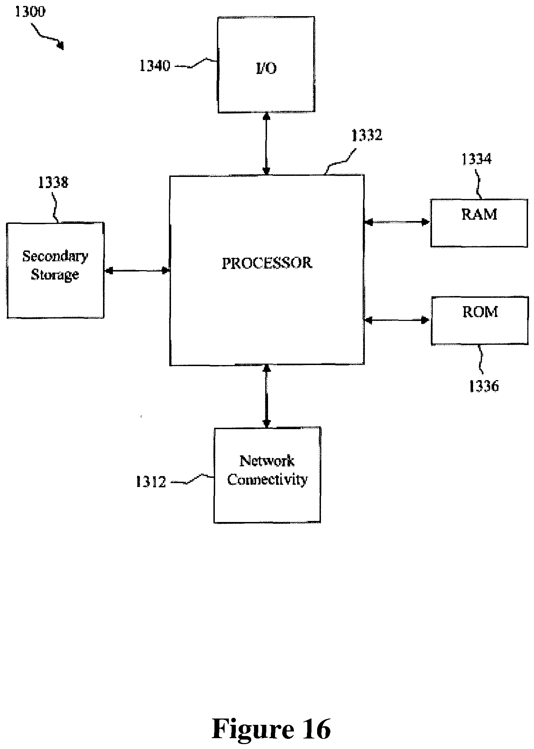

The network elements and other components of Figure 12 may include any general or special purpose computer with sufficient processing power, memory resources, and network throughput capability to handle the necessary workload placed upon it. Figure 16 illustrates an example computer system 1300 that may be suitable for implementing one or more embodiments disclosed herein. The computer system 1300 includes a processor 1332 (which may be referred to as a central processor unit or CPU) that is in communication with memory devices including secondary storage 1338, read only memory (ROM) 1336, random access memory (RAM) 1334, input/output (I/O) devices 1340, and network connectivity devices 1312. The processor may be implemented as one or more CPU chips.

The secondary storage 1338is typically comprised of one or more disk drives or tape drives and is used for non-volatile storage of data and as an over-flow data storage device if RAM 1334 is not large enough to hold all working data. Secondary storage 1338 may be used to store programs which are loaded into RAM 1334 when such programs are selected for execution. The ROM 1336 is used to store instructions and perhaps data which are read during program execution. ROM 1336 is a non-volatile memory device which typically has a small memory capacity relative to the larger memory capacity of secondary storage. The RAM 1334 is used to store volatile data and perhaps to store instructions. Access to both ROM 1336 and RAM 1334 is typically faster than to secondary storage 1338.

I/O devices 1340 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 1312 may take the form of modems, modem banks, ethernet cards, universal serial bus (USB) interface cards, serial interfaces, token ring cards, fiber distributed data interface (FDDI) cards, wireless local area network (WLAN) cards, radio transceiver cards such as code division multiple access (CDMA) and/or global system for mobile communications (GSM) radio transceiver cards, and other well-known network devices. These network connectivity 1312 devices may enable the processor 1332 to communicate with an Internet or one or more intranets. With such a network connection, it is contemplated that the processor 1332 might receive information from the network, or might output information to the network in the course of performing the above-described method steps. Such information, which is often represented as a sequence of instructions to be executed using processor 1332, may be received from and outputted to the network, for example, in the form of a computer data signal embodied in a carrier wave.

Such information, which may include data or instructions to be executed using processor 1332 for example, may be received from and outputted to the network, for example, in the form of a computer data baseband signal or signal embodied in a carrier wave. The baseband signal or signal embodied in the carrier wave generated by the network connectivity 1312 devices may propagate in or on the surface of electrical conductors, in coaxial cables, in waveguides, in optical media, for example optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, referred to herein as the transmission medium, may be generated according to several methods well known to one skilled in the art.

The processor 1332 executes instructions, codes, computer programs, scripts which it accesses from hard disk, floppy disk, optical disk (these various disk-based systems may all be considered secondary storage 1338), ROM 1336, RAM 1334, or the network connectivity devices 1312. While only one processor 1332 is shown, multiple processors may be present. Thus, while instructions may be discussed as executed by a processor, the instructions may be executed simultaneously, serially, or otherwise executed by one or multiple processors.

The following are incorporated herein by reference for all purposes: 3rd Generation Partnership Project (3GPP) Technical Specifications (TS) 23.401, 29.274, and 23.060. For the non-3GPP accesses, the LIPA detach procedures in an embodiment may involve different radio network access protocols and different network element entities.

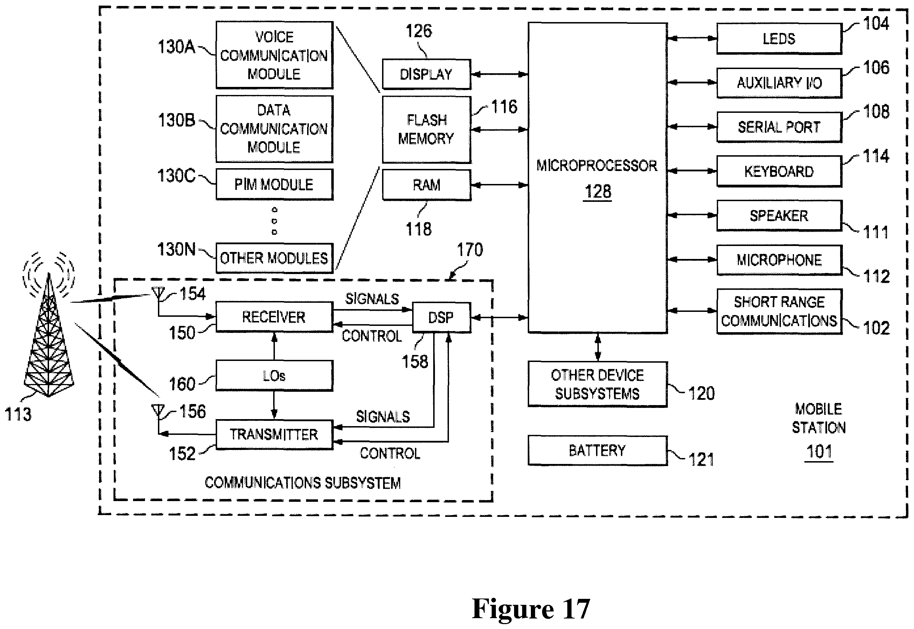

Referring now to Figure 17, there is shown a schematic block diagram illustrating exemplary components of a mobile wireless communications device 101 which may be used with selected embodiments of the present disclosure. The wireless device 101 is shown with specific components for implementing features described above. It is to be understood that the wireless device 101 is shown with very specific details for exemplary purposes only.

A processing device (e.g., microprocessor 128) is shown schematically as coupled between a keyboard 114 and a display 126. The microprocessor 128 controls operation of the display 126, as well as overall operation of the wireless device 101, in response to actuation of keys on the keyboard 114 by a user.

The wireless device 101 has a housing that may be elongated vertically, or may take on other sizes and shapes (including clamshell housing structures). The keyboard 114 may include a mode selection key, or other hardware or software for switching between text entry and telephony entry.

In addition to the microprocessor 128, other parts of the wireless device 101 are shown schematically. These include a communications subsystem 170; a short-range communications subsystem 102; the keyboard 114 and the display 126, along with other input/output devices including a set of LEDs 104, a set of auxiliary I/O devices 106, a serial port 108, a speaker 111 and a microphone 112; as well as memory devices including a flash memory 116 and a Random Access Memory (RAM) 118; and various other device subsystems 120. The wireless device 101 may have a battery 121 to power the active elements of the wireless device 101. The wireless device 101 is in some embodiments a two-way radio frequency (RF) communication device having voice and data communication capabilities. In addition, the wireless device 101 in some embodiments has the capability to communicate with other computer systems via the Internet.

Operating system software executed by the microprocessor 128 is in some embodiments stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the wireless device 101 may also be stored to the RAM 118.

The microprocessor 128, in addition to its operating system functions, enables execution of software applications on the wireless device 101. A predetermined set of software applications that control basic device operations, such as a voice communications module 130A and a data communications module 130B, may be installed on the wireless device 101 during manufacture. In addition, a personal information manager (PIM) application module 130C may also be installed on the wireless device 101 during manufacture. The PIM application is in some embodiments capable of organizing and managing data items, such as e-mail, calendar events, voice mails, appointments, and task items. The PIM application is also in some embodiments capable of sending and receiving data items via a wireless network 110. In some embodiments, the data items managed by the PIM application are seamlessly integrated, synchronized and updated via the wireless network 110 with the device user's corresponding data items stored or associated with a host computer system. As well, additional software modules, illustrated as another software module 130N, may be installed during manufacture.

Communication functions, including data and voice communications, are performed through the communication subsystem 170, and possibly through the short-range communications subsystem 102. The communication subsystem 170 includes a receiver 150, a transmitter 152 and one or more antennas, illustrated as a receive antenna 154 and a transmit antenna 156. In addition, the communication subsystem 170 includes a processing module, such as a digital signal processor (DSP) 158, and local oscillators (LOs) 160. In some embodiments, the communication subsystem 170 includes a separate antenna arrangement (similar to the antennas 154 and 156) and RF processing chip/block (similar to the Receiver 150, LOs 160 and Transmitter 152) for each RAT, although a common baseband signal processor (similar to DSP 158) may be used for baseband processing for multiple RATs. The specific design and implementation of the communication subsystem 170 is dependent upon the communication network in which the wireless device 101 is intended to operate. For example, the communication subsystem 170 of the wireless device 101 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), etc. Examples of CDMA include 1X and 1x EV-DO. The communication subsystem 170 may also be designed to operate with an 802.11 Wi-Fi network, and/or an 802.16 WiMAX network. Other types of data and voice networks, both separate and integrated, may also be utilized with the wireless device 101.

Network access may vary depending upon the type of communication system. For example, in the Mobitex™ and DataTAC™ networks, wireless devices are registered on the network using a unique Personal Identification Number (PIN) associated with each device. In GPRS networks, however, network access is typically associated with a subscriber or user of a device. A GPRS device therefore typically has a subscriber identity module, commonly referred to as a Subscriber Identity Module (SIM) card, in order to operate on a GPRS network.

When network registration or activation procedures have been completed, the wireless device 101 may send and receive communication signals over the communication network 113. Signals received from the communication network 113 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the network 113 are processed (e.g., modulated and encoded) by the DSP 158 and are then provided to the transmitter 152 for digital to analog conversion, frequency up conversion, filtering, amplification and transmission to the communication network 113 (or networks) via the transmit antenna 156.

In addition to processing communication signals, the DSP 158 provides for control of the receiver 150 and the transmitter 152. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 170 and is input to the microprocessor 128. The received signal is then further processed by the microprocessor 128 for an output to the display 126, or alternatively to some other auxiliary I/O devices 106. A device user may also compose data items, such as e-mail messages, using the keyboard 114 and/or some other auxiliary I/O device 106, such as a touchpad, a rocker switch, a thumb-wheel, or some other type of input device. The composed data items may then be transmitted over the communication network 113 via the communication subsystem 170.

In a voice communication mode, overall operation of the device is substantially similar to the data communication mode, except that received signals are output to a speaker 111, and signals for transmission are generated by a microphone 112. Alternative voice or audio I/O subsystems, such as a voice message recording subsystem, may also be implemented on the wireless device 101. In addition, the display 126 may also be utilized in voice communication mode, for example, to display the identity of a calling party, the duration of a voice call, or other voice call related information.

The short-range communications subsystem 102 enables communication between the wireless device 101 and other proximate systems or devices, which need not necessarily be similar devices. For example, the short range communications subsystem may include an infrared device and associated circuits and components, or a Bluetooth™ communication module to provide for communication with similarly-enabled systems and devices.

In still further embodiments, computer program product is disclosed that includes a non-transitory computer readable storage medium having computer readable program code embodied therein with instructions which are adapted to be executed to implement a method at a network element (e.g., MME) to use the contents of a context request message or a response to determine if LIPA service continuity is provided or not, substantially as described hereinabove. To this end, each of the network elements may be configured to transform the contents of a context request message or a context response message as described herein using, among other components, one or more processors that run one or more software programs or modules embodied in circuitry and/or non-transitory storage media device(s) (e.g., RAM, ROM, flash memory, etc.) to communicate with other network elements to receive and/or send data and messages.

It should be understood that as used herein, terms such as coupled, connected, electrically connected, in signal communication, and the like may include direct connections between components, indirect connections between components, or both, as would be apparent in the overall context of a particular embodiment. The term coupled is intended to include, but not be limited to, a direct electrical connection.

Although the described exemplary embodiments disclosed herein are described with reference to selected communication systems, the present disclosure is not necessarily limited to the example embodiments which illustrate inventive aspects of the present disclosure that are applicable to a wide variety of network connectivity arrangements. Thus, the particular embodiments disclosed above are illustrative only and should not be taken as limitations upon the present disclosure, as the embodiments may be modified and practiced in different but equivalent manners apparent to those skilled in the art having the benefit of the teachings herein. Accordingly, the foregoing description is not intended to limit the disclosure to the particular form set forth, but on the contrary, is intended to cover such alternatives, modifications and equivalents as may be included within the scope of the disclosure as defined by the appended claims so that those skilled in the art should understand that they can make various changes, substitutions and alterations without departing from the scope of the claims.

## Claims

1. A system comprising first network element and a second network element enhanced to support offloading of user plane traffic, the second network element being configured to receive a TAU request message or a RAU request message, the received request message including one or more second indicators in the information associated with the received request message, wherein the second network element is further configured to:
send a context request message to a first network element,
receive a response to the context request message, the response including one or more context with one or more first indicators,
compare the one or more first indicators with one or more second indicators, and
send a message associated with performing a second network-element-initiated Detach Procedure,
wherein the comparing the one or more first indicators with the one or more second indicators further comprises a determining that the one or more first indicators do not match the one or more second indicators, and wherein the sending the message associated with performing the second network element initiated Detach Procedure is subject to the said determining, and wherein the first network element is configured to receive the one or more first indicators in a message carrying a PDN connectivity request.

2. A method of offloading user plane traffic, comprising:
receiving, by a second network element (1240), a TAU request message or a RAU request message, the request message potentially including one or more second indicators in the information associated with the request message,
sending by the second network element a context request message to a first network element,
receiving by the second network element a response to the context request message, the response including one or more context with one or more first indicators,
comparing by the second network element the one or more first indicators with one or more second indicators, and
sending by the second network element a message associated with performing a second network element initiated Detach Procedure;
wherein the one or more first indicators are received at the first network element in a message carrying a PDN connectivity request;
wherein the comparing the one or more first indicators with one or more second indicators further comprises a determining that the one or more first indicators do not match the one or more second indicators, and wherein the sending the message associated with performing the second network element-initiated Detach Procedure is subject to the said determining.

## Patentansprüche

1. System, das ein erstes Netzwerkelement und ein zweites Netzwerkelement umfasst, die zum Unterstützen von Auslagern von Verkehr auf Benutzerebene erweitert sind, wobei das zweite Netzwerkelement ausgelegt ist, eine TAU-Anforderungsnachricht oder eine RAU-Anforderungsnachricht zu empfangen, wobei die empfangene Anforderungsnachricht einen oder mehrere zweite Hinweise in den mit der empfangenen Anforderungsnachricht verbundenen Informationen enthält, wobei das zweite Netzwerkelement ferner ausgelegt ist:
eine Kontextanforderungsnachricht an ein erstes Netzwerkelement zu senden,
eine Antwort auf die Kontextanforderungsnachricht zu empfangen, wobei die Antwort einen oder mehrere Kontexte mit einem oder mehreren ersten Hinweisen enthält,
den einen oder die mehreren ersten Hinweise mit einem oder mehreren zweiten Hinweisen zu vergleichen und
eine mit einem Durchführen einer durch das zweite Netzwerkelement initiierten Trennprozedur verbundene Nachricht zu senden,
wobei das Vergleichen des einen oder der mehreren ersten Hinweise mit dem einen oder den mehreren zweiten Hinweisen ferner ein Ermitteln umfasst, dass der eine oder die mehreren ersten Hinweise nicht mit dem einen oder den mehreren zweiten Hinweisen übereinstimmen, und wobei das Senden der mit dem Durchführen der durch das zweite Netzwerkelement initiierten Trennprozedur assoziierten Nachricht dem Ermitteln unterzogen wird, und wobei das erste Netzwerkelement ausgelegt ist, den einen oder die mehreren ersten Hinweise in einer Nachricht zu empfangen, die eine PDN-Verbindungsanforderung trägt.

2. Verfahren zum Auslagern von Verkehr auf Benutzerebene, umfassend:
Empfangen, durch ein zweites Netzwerkelement (1240), einer TAU-Anforderungsnachricht oder einer RAU-Anforderungsnachricht, wobei die Anforderungsnachricht möglicherweise einen oder mehrere zweite Hinweise in den mit der Anforderungsnachricht assoziierten Informationen enthält,
Senden einer Kontextanforderungsnachricht an ein erstes Netzwerkelement durch das zweite Netzwerkelement,
Empfangen einer Antwort auf die Kontextanforderungsnachricht durch das zweite Netzwerkelement, wobei die Antwort einen oder mehrere Kontexte mit einem oder mehreren ersten Hinweisen enthält,
Vergleichen des einen oder der mehreren ersten Hinweise mit einem oder mehreren zweiten Hinweisen durch das zweite Netzwerkelement und
Senden einer mit einem Durchführen einer durch das zweite Netzwerkelement initiierten Trennprozedur verbundene Nachricht durch das zweite Netzwerkelement;
wobei der eine oder die mehreren ersten Hinweise in einer eine PDN-Verbindungsanforderung enthaltenen Nachricht am ersten Netzwerkelement empfangen werden;
wobei das Vergleichen des einen oder der mehreren ersten Hinweise mit einen oder mehreren zweiten Hinweisen ferner ein Ermitteln umfasst, dass der eine oder die mehreren ersten Hinweise nicht mit dem einen oder den mehreren zweiten Hinweisen übereinstimmen, und wobei das Senden der mit dem Durchführen der durch das zweite Netzwerkelement initiierten Trennprozedur assoziierten Nachricht dem Ermitteln unterzogen wird.

## Revendications

1. Système comprenant un premier élément de réseau et un second élément de réseau améliorés pour prendre en charge un délestage de trafic de plan d'utilisateur, le second élément de réseau étant configuré pour recevoir un message de requête de TAU or un message de requête de RAU, le message de requête reçu comprenant un ou plusieurs seconds indicateurs dans les informations associées au message de requête reçu, le second élément de réseau étant en outre configuré pour :
envoyer un message de requête de contexte à un premier élément de réseau,
recevoir une réponse au message de requête de contexte, la réponse comprenant un ou plusieurs contextes avec un ou plusieurs indicateurs,
comparer le ou les premiers indicateurs à un ou plusieurs seconds indicateurs, et
envoyer un message associé à la réalisation d'une procédure de détachement initiée par un second élément de réseau,
la comparaison du ou des premiers indicateurs au ou aux seconds indicateurs comprenant en outre une détermination du fait que le ou les premiers indicateurs ne correspondent pas au ou aux seconds indicateurs, et l'envoi du message associé à la réalisation de la procédure de détachement initiée par un second élément de réseau étant soumis à ladite détermination, et le premier élément de réseau étant configuré pour recevoir le ou les premiers indicateurs dans un message transportant une requête de connectivité de PDN.

2. Procédé de délestage de trafic de plan d'utilisateur, comprenant :
recevoir, par un second élément de réseau (1240), un message de requête de TAU ou un message de requête de RAU, le message de requête comprenant potentiellement un ou plusieurs seconds indicateurs dans les informations associées au message de requête,
envoyer, par le second élément de réseau, un message de requête de contexte à un premier élément de réseau,
recevoir, par le second élément de réseau, une réponse au message de requête de contexte, la réponse comprenant un ou plusieurs contextes avec un ou plusieurs premiers indicateurs,
comparer, par le second élément de réseau, le ou les premiers indicateurs à un ou plusieurs seconds indicateurs, et
envoyer, par le second élément de réseau, un message associé à la réalisation d'une procédure de détachement initiée par un second élément de réseau ;
le ou les premiers indicateurs étant reçus au niveau du premier élément de réseau dans un message transportant une requête de connectivité de PDN ;
la comparaison du ou des premiers indicateurs à un ou plusieurs seconds indicateurs comprenant en outre une détermination du fait que le ou les premiers indicateurs ne correspondent pas au ou aux seconds indicateurs, et l'envoi du message associé à la réalisation de la procédure de détachement initiée par un second élément de réseau étant soumis à ladite détermination.
